Europäisches Patentamt

(19) European Patent Office

Office européen des brevets

(11) Publication number: **0 116 098**
**B1**

(12) **EUROPEAN PATENT SPECIFICATION**

(45) Date of publication of patent specification: **22.06.88**

(21) Application number: **82305387.1**

(22) Date of filing: **31.01.83**

(51) Int. Cl.⁴: **G 06 F 13/42, G 06 F 13/12**

(54) **Peripheral controller for i/o subsystem using slow devices.**

(43) Date of publication of application:
**22.08.84 Bulletin 84/34**

(45) Publication of the grant of the patent:
**22.06.88 Bulletin 88/25**

(84) Designated Contracting States:
**BE DE FR GB IT NL SE**

(56) References cited:
**US-A-4 000 487**
**US-A-4 124 888**
**US-A-4 166 289**
**US-A-4 287 560**
**US-A-4 290 106**
**US-A-4 291 372**
**US-A-4 292 667**
**US-A-4 293 909**
**US-A-4 301 505**

(73) Proprietor: **UNISYS CORPORATION**
**Burroughs Place**
**Detroit Michigan 48232 (US)**

(72) Inventor: **Catiller, Robert Douglas**
**8352 Stanford Avenue**
**Garden Grove California 92641 (US)**
Inventor: **Forbes, Brian Kirk**
**16161 Birdie Lane**
**Huntington Beach California 92646 (US)**

(74) Representative: **Kirby, Harold Douglas Benson**
**et al**
**G.F. Redfern & Company Marlborough Lodge 14**
**Farncombe Road**
**Worthing West Sussex BN11 2BT (GB)**

Courier Press, Leamington Spa, England.

## Description

Background of the invention

This invention relates to peripheral controllers used in I/O systems for controlling data transfer operations between a main host computer and a plurality of peripheral terminal units.

Cross references to related applications:

This application is related to the following U.S. Patents:

U.S. Patent 4,292,667 entitled "Microprocessor System Facilitating Repetition of Instructions" to Robert D. Catiller and Brian K. Forbes;

U.S. Patent 4,290,106 entitled "Microprocessor System with Source Address Selection" to Robert D. Catiller and Brian K. Forbes;

U.S. Patent 4,301,505 entitled "Microprocessor Having Word and Byte Handling" to Robert D. Catiller and Brian K. Forbes, filed June 27, 1979, U.S. Serial No. 052,478;

U.S. Patent 4,293,909 entitled "Digital System for Data Transfer Using Universal Input-Output Microprocessor" to Robert D. Catiller and Brian K. Forbes;

U.S. Patent 4,291,372 entitled "Microprocessor System with Specialized Instruction Format" to Brian K. Forbes and Robert D. Catiller.

Certain prior patents of the assignee of this invention form a background and understanding of the type of I/O systems used herein and these patents, listed below, are included herein by reference.

U.S. Patent 4,162,520 to Darwen J. Cook and Donald Millers II entitled "Intelligent Input/Output Interface Control Unit for Input-Output Subsystem". This patent described a unit called a Data Link Processor for handling I/O data transfers.

U.S. Patent 4,189,769 to Darwen J. Cook and Donald Millers II entitled "Input-Output Subsystem for Digital Data Processing System". This patent described peripheral-controllers organized into base module units to form an I/O subsystem.

U.S. Patent 4,280,193 to Kenneth W. Baun and Jimmy G. Saunders entitled "Data Link Processor for Magnetic Tape Data Transfer System". This patent described a peripheral-controller made of a standardized card, called Common Front End, and a particularized card called the PDB or Peripheral-Dependent Board.

Prior Art:

Microprocessors and microprocessor systems will be seen to generally follow the architectural formulas and interrelationships which were established from general computer technology. However, microprocessors making use of large scale integrated techniques can be made into small packages with the use of integrated circuit chips and will generally follow the pattern of using a central processing unit, memory input-output circuits and various other control and support circuitry.

It is typical that the architecture of microprocessors will generally use a program counter which is used to select some portion of memory to be addressed for retrieving program instruction codes to be executed.

In the usage of a system where a central or main host processor operates in conjunction with a number of remotely located "base modules" which base modules support a group of peripheral-controllers which service and control external peripheral units, a considerable amount of circuitry has been required to provide data transfer capability on an efficient basis and also to cater to specific needs of each type of peripheral unit.

Heretofore each peripheral-controller which was situated in a base module was burdened with many processor and control circuits for handling the specific requirements of each peripheral terminal unit leading to a heavy burden of circuitry in each peripheral-controller.

To alleviate the burden of costly circuitry for each peripheral controller, a universal or architecturally standard microprocessor was developed which would provide a multiplicity of processing functions for use in a peripheral-controller so that the peripheral-controller would only need a limited amount of application dependent logic and circuitry for handling the particular types of peripherals which it serviced. Thus, the universal processor or as it is called here, the "universal I/O state machine", could serve as a standard unit for all types of peripheral-controllers so that each of the peripheral-controllers would only need to have the minimum amount of circuitry and programs required for application to the particular peripherals in the network.

Thus, with the use of the universal I/O state machine as a general purpose microprocessor in these applications, it became possible to reduce the cost, the quantity of circuitry, the space requirements and the system of architectural arrangements so that a more economical and more efficient architectural system could be established. Thus, with the advent of the described universal I/O state machine, there has been devised a generalized type of microprocessor which can serve as part of any type of peripheral-controller in a base module thus to handle any variety of peripheral terminal units. This generalized and simplified type of microprocessor (oriented to (a) addressing instructions and data and (b) manipulating data) executes its operations very rapidly and is designed to handle individual bytes for operations with peripheral devices which are "byte" oriented and also can execute processing and transfer operations with complete words (a word here being two 8-bit bytes symbolized as AB) for use with peripheral terminals which are "word oriented" and which can accept or transmit full words.

The universal microprocessor working in conjunction with the peripheral-oriented application dependent logic module permits the development of a generalized type of peripheral-controller which can handle a plurality of peripheral units instead of requiring a separate controller for each peripheral unit. Since the hardware and programming of the microprocessor remains standard and constant for each of the peripheral-controllers while the application dependent module is programmed to cater to a group of selected peripherals, it is thus possible to accomplish not only great versatility in data transfer and control features but also to provide great economies in circuitry and cost.

In digital systems where many instructions and control signals are required for the transfer of data to a variety of different types of peripheral units, generally a specifically tailored and designed peripheral-controller was provided which is particularly suited to handle the data transfers to and from a single particular type of peripheral unit. It was found that by providing a uniform microprocessor for all types of peripheral-controllers which only varied in the type of application dependent logic programs required for specific types of peripheral devices, that great economies of space and cost could be realized. Thus, the combination of a universal microprocessor working in conjunction with an application dependent module could form a peripheral-controller to serve data transfer functions previously requiring a series of peripheral-controllers.

In US—A—4 287 560 there is disclosed a peripheral-controller which includes a processor or arithmetical logic unit, a program memory, memory address means which includes a program counter for addressing internal program memory, and a memory reference register for addressing external memory in said application dependent logic module. An instruction register receives instructions from said program memory (or external memory) on an instruction bus which is conveyed to an instruction decoder-controller. A plurality of addressable accumulator registers connects to an input-output bus and temporarily stores data for input to said arithmetic logic unit. A stack memory saves data from the program counter during interrupt actions while a memory-save register saves data from said memory reference register during interrupt operation. An instruction decoder-controller generates and receives control signals to and from said application dependent logic module, in addition to providing control signals to the universal microprocessor.

US—A—4 124 888 discloses a peripheral-controller which includes a controller memory unit comprising two read only memory chips and a program counter driven by the main system clock.

The present invention is concerned with a peripheral-controller of the kind disclosed in US—A—4 287 560, said peripheral-controller comprising a main host computer and a plurality of peripheral terminals, wherein said peripheral-controller comprises a universal processor system and an application-dependent module, wherein said universal processor system includes an internal program memory for storing instructions; memory address logic means for selectively accessing data from said internal program memory or from an external memory; instruction-execution logic means for executing program instructions, said means having control lines to said internal memory, to said external memory, to said memory address logic means and to data manipulation logic means; wherein said application-dependent logic module includes an external memory for holding data-transfer programs for peripheral terminals and for temporarily storing data undergoing transfer; external register means for temporarily holding instructions and data undergoing transfer, said external register means having bus connections to said main host computer and to said plurality of peripheral terminals; and control logic means for controlling said external memory, said external register means, and said universal processor system, wherein said instruction-execution logic means includes an instruction register receiving instructions from said internal program memory or said external memory, and providing an output to an instruction decoder-controller which also receives control signals from said application-dependent logic module, and functions to control said universal processor system and said application-dependent logic module to execute data transfer instructions initiated by said host computer, wherein said memory address logic means includes a program counter for addressing said internal program memory; and a memory reference register for addressing said external memory.

In accordance with the present invention a peripheral-controller for use in a data transfer network comprises a main host computer and a plurality of peripheral terminals, the peripheral-controller being made of slide-in cards mounted in a base module wherein said base module includes a distribution control card circuit to connect and/or disconnect said host computer to said peripheral-controller and a maintenance card circuit for providing clock signals and test signals to said peripheral-controller, wherein said peripheral-controller comprises a universal processor system and an application-dependent module, the universal processor system functioning, after initiation by instruction from said main host computer, to generate and execute data transfer commands for data transfer operations between said host computer and selected peripheral terminals, wherein said universal processor system includes an internal program memory for storing instructions, memory address logic means for selectively accessing data from said internal program memory or from an external memory; instruction-execution logic means for executing program instructions, said means having control lines to said internal memory, to said external memory, to said memory address logic means and to data manipulation logic means; wherein said application-dependent logic module inter-cooperates with said processor system and includes an external memory for holding data-transfer programs for peripheral terminals and for temporarily storing data undergoing transfer; external register means for temporarily holding instructions and data undergoing transfer, said external register means having bus connections to said main host computer and to said plurality of peripheral terminals; and control logic means including address decoder means for recognizing address signals directed to slow external memory or to slow peripheral terminals, for controlling said external memory, said external register means, and said universal process system and further comprising bus means including an I/O bus for carrying instructions and data from said universal processor to said external memory, said external register, and said control logic means; a memory address bus for addressing said external memory and said address decoder; a memory data output bus for carrying instructions and data from said external memory to said universal process system; an instruction output bus for carrying instructions from the internal program memory to the instruction-execution logic means, and control lines for communication and control between said application-dependent logic module and said universal processor system, wherein said instruction-execution logic means includes an instruction register receiving instructions from said internal program memory or said external memory, and providing an output to an instruction decoder-controller which also receives control signals from said application-dependent logic module, and functions to control said universal processor system and said application-dependent logic module to execute data transfer instructions initiated by said host computer, wherein said memory address logic means includes a program counter for addressing said internal program memory; and a memory reference register for addressing said external memory, and a bit field to signal said instruction-execution logic means to select either said program counter or said memory reference register as a source of addresses for access from said internal or said external memory, characterised in that said universal processor includes clock circuitry triggered by said maintenance card clock signals to time the rate of processor operations and a WAIT signal input line from an application-dependent logic module for temporarily disabling said clock circuitry to permit data transfer operations at a slower rate for slow memories and slow peripherals; and said address decoder means has means to generate a WAIT signal to disable said processor clock circuitry for a set number of clock cycles to maintain a slower rate of data transfer than the rate of said processor system; in that said instruction decoder-controller includes linear sequencing means for selecting microinstructions for execution in a pre-determined sequence, said sequencing means including a microinstruction memory receiving input instructions from said instruction register, and providing output control signals to said universal processor system and a state counter for sequentially addressing said microinstruction memory to generate output control signals for execution of instructions and another control signal for sequencing said state counter; and in that said instruction register provides output signals to selectively address a specific external register in said external register means, and output signals to address a specific register of said accumulator register means as a source of data and/or as a destination of data, the arrangement of the I/O bus, the memory address bus, the memory data output bus and the instruction output bus being such as to provide separate paths for instructions and for operands, so that while the processor stores data using the I/O bus during one clock cycle, instructions may be simultaneously fetched from the internal program memory via the instruction bus, and while the instruction is being decoded in the next clock cycle, an operand may be fed to the memory operand register via the data output bus.

The process of the peripheral-controller of the present invention, upon receipt of an I/O data transfer command from a host computer, will generate instructions and execute data transfer operations to/from peripheral terminals by use of an application dependent logic module which provides an external memory with instructions for peripheral terminal control and which has control logic which recognizes when slow devices are addressed. The control logic can then initiate a WAIT signal to said universal processor slow down and regulate the rate of data transfers to slow memory and slow peripheral terminals.

A linear microsequencer circuit operates a decoder-controller in the microprocessor. The microsequencer includes a micro-instruction PROM which is sequentially stepped by a State Counter after being initiated by the "Clear" signal. The micro-instruction PROM also receives signals from an instruction register and flag registers. The micro-instruction PROM then provides Control Term signals for operation of the microprocessor system.

Brief description of the drawings

Fig. 1 is an overall block diagram illustrating the use of a main host system computer with a plurality of base modules which support peripheral-controllers which communicate with peripheral devices.

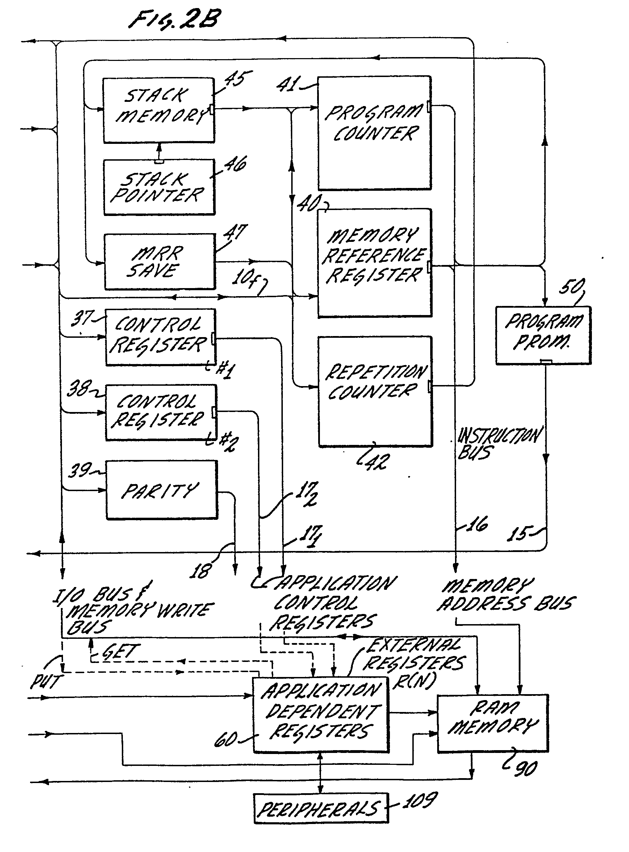

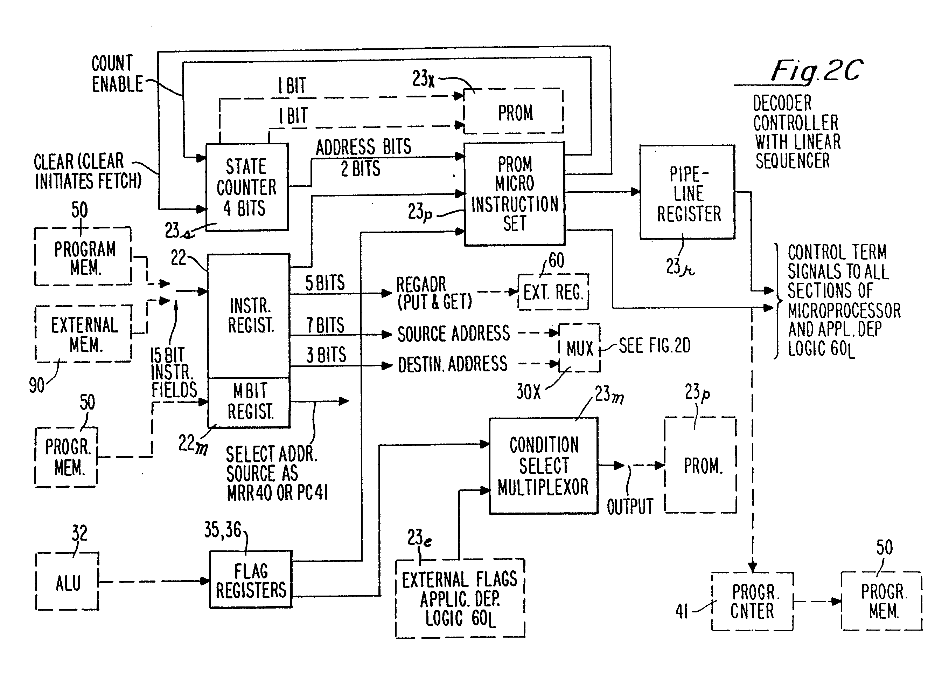

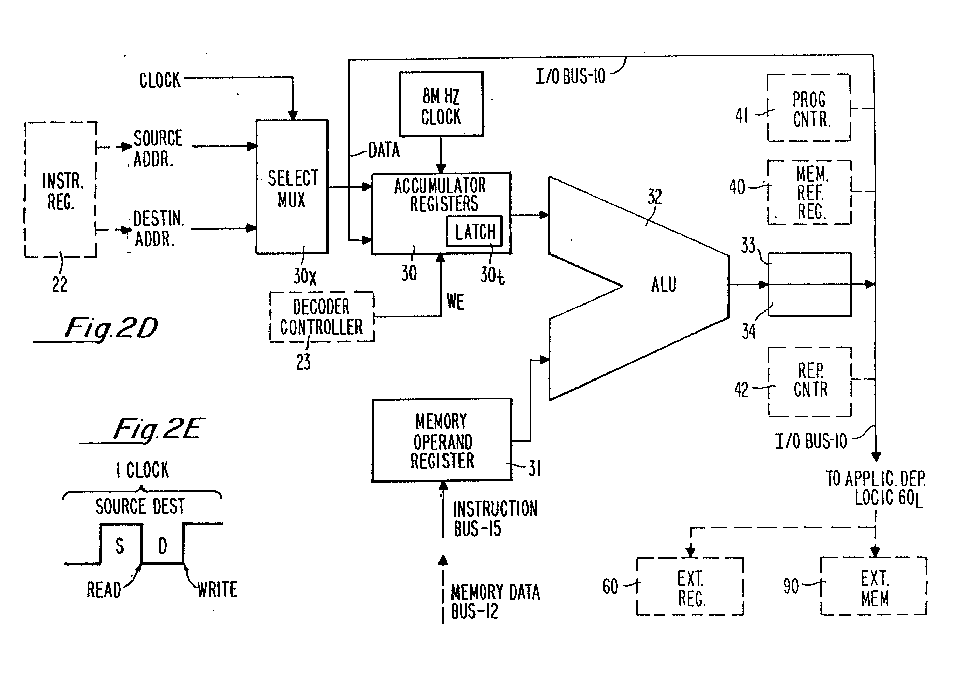

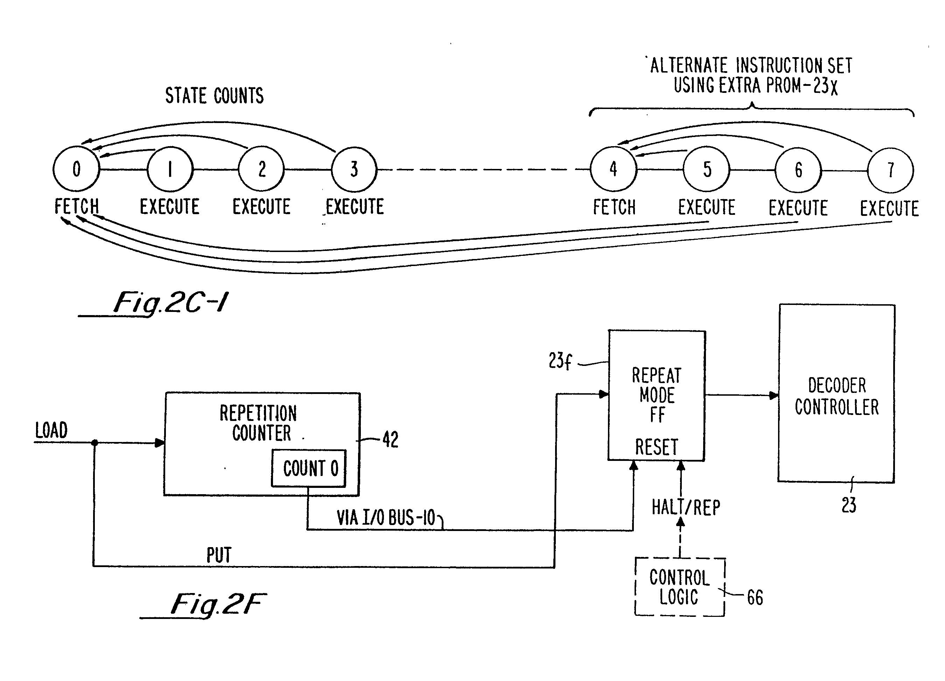

Fig. 2 is a diagram of the peripheral-controller showing the elements of the universal input-output microprocessor state machine and its communication lines to the application dependent logic module. Fig. 2 is subdivided into two portions designated as Fig. 2A and Fig. 2B such that by juxtaposing Fig. 2A to the left of Fig. 2B (and Fig. 2B to the right of Fig. 2A) the continuity of connections between the two drawings may be seen. Fig. 2C is a schematic drawing of the decoder-controller with its linear sequencer circuitry; Fig. 2C-1 shows the state counts; Fig. 2D illustrates the addressing of selected accumulator registers and their relation to the arithmetic logic unit and I/O bus; Fig. 2E shows how source and destination addresses are accessed in one clock period; Fig. 2F is a schematic drawing illustrating the relationship between the repetition counter and repeat-mode flip-flop.

Fig. 3 is a schematic diagram showing certain memory addressing features of the UIO-State Machine, particularly the use of a dedicated bit designated as the "byte-swap" bit.

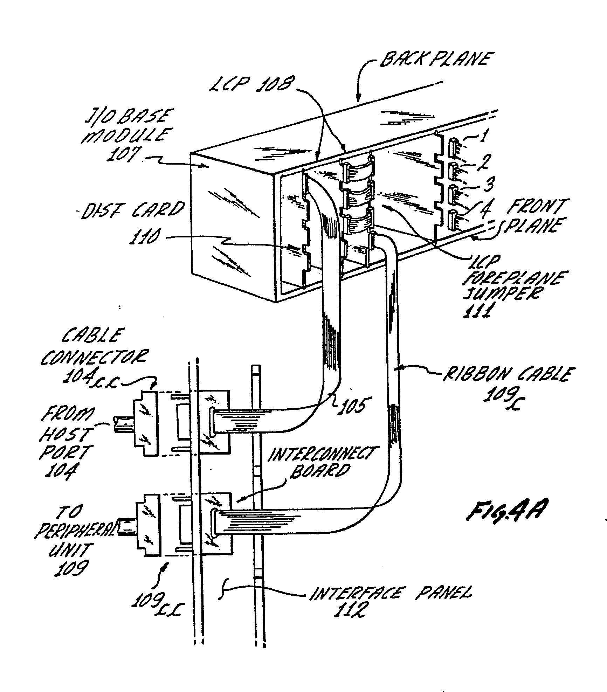

Fig. 4A is a perspective drawing of the input-output base module and showing major elements such as the distribution control card, the peripheral controller (line control processor) card and certain connections from the front plane (fore plane) to the host computer and to peripheral units. Fig. 4B is a schematic drawing showing circuit connections to the four front plane connectors. Fig. 4B is oriented such that it shows the first front plane connector while Fig. 4B-1 shows the second front plane connector. Orientation-wise the Fig. 4B-1 can be juxtaposed underneath the Fig. 4B in order to provide continuity to the connections shown between the two front plane connectors. Fig. 4B-2 illustrates connections to the front plane connector No. 3 and Fig. 4B-3 illustrates the connections to the front plane connector No. 4.

Fig. 5 is a timing diagram showing the clocking of output control registers of the UIO-state machine.

Fig. 6 is a circuit drawing showing how the program memory is enabled.

Fig. 7 is a timing diagram for the clear line.

Fig. 8 is a timing diagram showing the WAIT line timing.

Fig. 9 is a timing diagram showing timing for non-repeated GET/PUT functions.

Fig. 10 shows the timing diagrams for the repeated GET/PUT functions.

Fig. 11 is a diagram showing the correlated timing features for reading data from external memory on the memory data bus.

Fig. 12 is a timing diagram showing the timing correlations between the clock, the memory address signal and the memory write data on the I/O bus.

Fig. 13 is a timing diagram showing the relationship of the halt repetition function signal to the clock.

Fig. 14 is a timing diagram showing the relationship of the parity error signal to the clock and memory address signal.

Description of the preferred embodiment

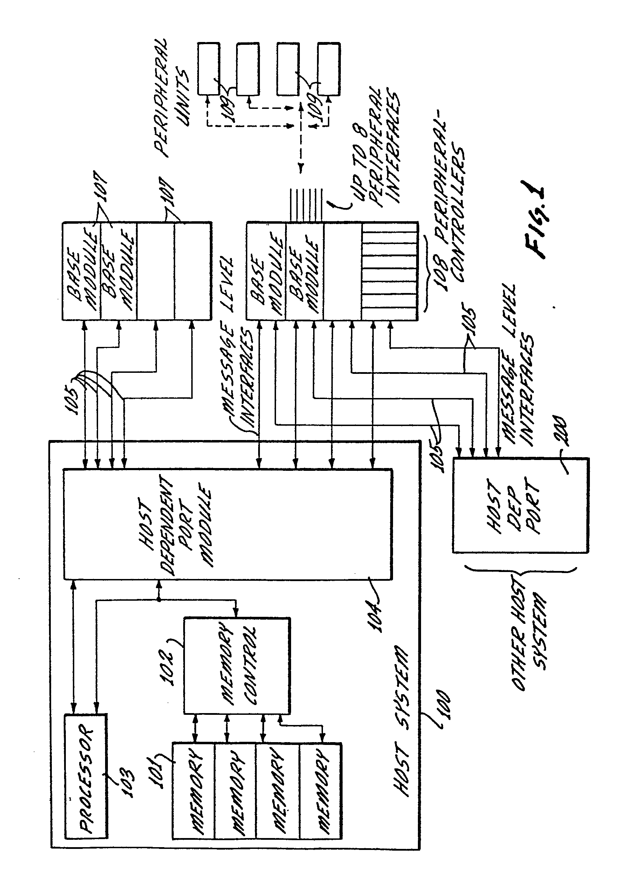

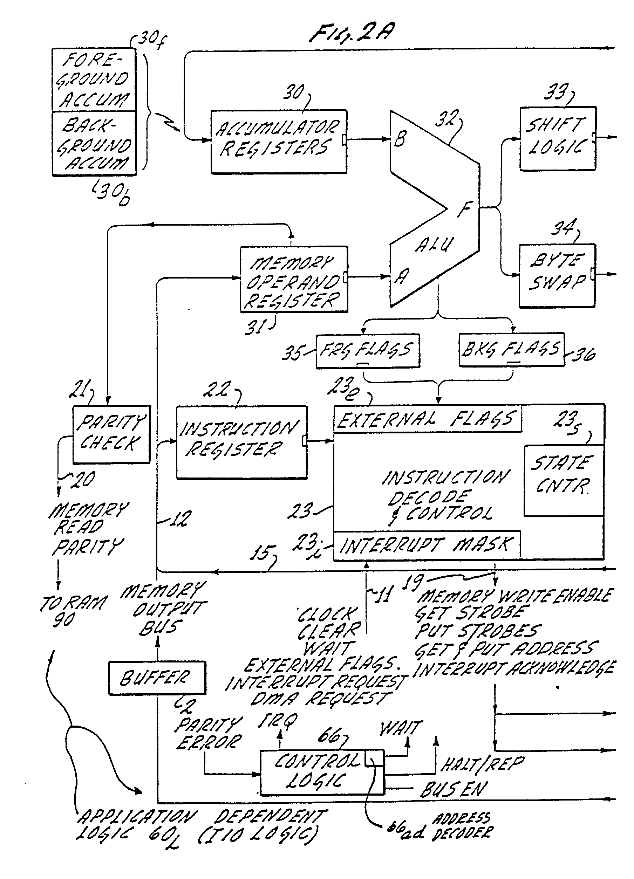

Referring to Fig. 1, there is seen a system block diagram of a typical Burroughs host computer system, with central processing unit cabinet 100 having basically a series of main memory modules 101, a memory control module 102, a data processor module 103, working in cooperation with a host dependent port module 104. The host dependent port module provides a series of communication cables 105 designated as MLI or message level interfaces. These message level interfaces provide communication lines to a base module cabinet 106 (or a plurality of such cabinets) which are designated as the Universal Input/Output Base Module Cabinet. The base module cabinet is built to support a plurality of universal input/output (UIO) base modules 107. Each of these UIO base modules provides communication, control, and data transfer lines to specific types of peripheral devices.

It should be noted that the host dependent port module can have message level interfaces to a plurality of UIO base module cabinets. And likewise, each UIO base module cabinet may have message level interface communication lines to other host systems 200 (main memory and processor) in addition to the first described host system of Fig. 1.

In the preferred embodiment of the system to be described herein, it will be seen that a base module cabinet can support from one to four UIO base modules. Formerly each of the UIO base modules contained up to eight peripheral-controllers 108 known as "line control processors" and each of the line control processors were dedicated to data transfer and control with a particular type of peripheral device 109. This plurality of separate peripheral-controllers for each different peripheral has now been replaced with a single universal microprocessor and application dependent logic module which constitutes a single peripheral-controller for handling a plurality of peripheral terminals.

Another provision of the system will allow for a unit designated as a line expansion module (LEM) which can be inserted in the UIO base module so that a single message level interface can be extended to communicate with up to eight UIO base modules.

The host system as represented by the central processing unit cabinet 100 can communicate with up to 64 peripheral controllers (line control processors) for each message level interface (MLI), if the base module is provided with the unit known as an LEM or line expansion module.

As seen in Fig. 1, the host system 100 can have eight message level interfaces (MLI) and can thus communicate with up to 512 peripheral controllers (line control processors).

The peripheral controllers or line control processors (LCP) are controllers which are dedicated to data transfer and control between a peripheral terminal and the main host system or a plurality of host systems.

The peripheral controllers known as line control processors have been described, both in their system interrelationships and in their internal workings, in a number of previously filed patent applications and issued patents. These include the following United States Patents: U.S. Patent 4,174,352 entitled "Modular Block Unit for I/O Subsystem", inventors Darwen J. Cook and Donald A. Millers, II; U.S. Patent 4,106,092 entitled "Interface System Providing Interfaces to Central Processing Units and Modular Processor-Controllers for an Input-Output Subsystem", inventor Donald A. Millers, II; U.S. Patent 4,162,520 entitled "Intelligent Input-Output Interface Control Unit for Input-Output Subsystem", inventors Darwen J. Cook and Donald A. Millers, II; and U.S. Patent 4,189,769, entitled "I/O Subsystem for Digital Data Processing System", inventors Darwen J. Cook and Donald A. Millers, II, and these patents are included herein by reference.

**0 116 098**

The peripheral controllers known as line control processors (LCP's) may generally fall into types of categories. There is the 2-card LCP and the 3-card LCP.

The 2-Card LCP:

This peripheral controller has a first card which is designated as the CFE or common front-end on which there are supplied a plurality of read-only memories (ROM's); hardware-wise these common front-end cards are of the same construction and nature except that in individual cases the ROMs are made to hold different programs which are suitable to the application at hand or the peripheral device with which it is used; thus, hardware-wise all the front-end cards will be found to be the same physically but only differ in the fact that different program material is inserted in the individual ROMs. The second card in the 2-card LCP is the PDC or peripheral dependent card. This card is uniquely built and adapted to suit the particular type of peripheral unit to which it communicates. It may be designated as an "application dependent logic module".

The 3-Card LCP:

Here, again, the first card is the CFE or common front-end card which is physically the same except for different programming inside the ROM, this program being varied according to the application required. The second card is the CDC or common data card which is tailored to suit the requirements of different peripheral units; however, it may be the same for such a group of items as magnetic tape, punched card-tape, disk pack, and console controls. The third card of the 3-card LCP is designated as the PDC or peripheral dependent card. This card is unique and is designed to handle one particular type of peripheral device.

In Fig. 4A there is seen a more detailed perspective drawing of a typical I/O base module 107. A plurality of these base modules are housed and serviced by a base module cabinet 126 of Fig. 1.

The base module 107 provides housing whereby printed circuit cards holding integrated circuitry may be inserted on sliding tracks in order to connect with the backplane connectors for automatic connection into the system. A peripheral controller (or line control processor) 108 may require, as previously described, two printed circuit or three printed circuit cards. The base module may support up to eight such peripheral controllers in its housing. Communications between the base module and the host system are controlled by distribution card 110. Other specialized handling printed circuit cards may be inserted, such as the previously mentioned line expansion module, common front-end card, common data card; or a second distribution control card, etc., can be inserted for connection into said base module 107.

The frontplane or foreplane permits jumper cable connections 111 (Fig. 4A) between printed circuit cards and also permits connection cables such as message level interface 105 to the host computer or ribbon cable 109$_c$ to permit connection from the base module to external devices such as peripheral device 109.

An interface panel 106 may be provided on the base module cabinet 120 to provide for cable connectors such as 104$_{cc}$, 109$_{cc}$ to facilitate disassembly and reconnection.

As was described in the previously mentioned patent references regarding line control processors, each base module unit is provided with a Distribution Control Card 110, Fig. 4A, which connects the message level interface from the main host system to a selectively addressed line control processor (peripheral controller) in that base module. Further, the base module has a common maintenance card and a common termination card which acts in common to service the entire group of up to eight line control processors in a base module.

The UIO base module may also support a line expansion module or LEM. This feature expands the usage of a UIO base module by adding another Distribution Control Card which permits connection of that base module to yet another main host system in addition to the one already connected to the first Distribution Control Card. Thus, communication from a main host system can be expanded to cover two or more UIO base modules and their attendant line control processors. Likewise, two or more host systems can be made to communicate to a UIO base module or a plurality of such base modules.

When it is desired to have one UIO base module connected to two main host computers, then a control card is used which is called the BCC or base control card. The base control card serves two basic functions; (a) to provide an interlock when multiple host computers try to access a base module, so that line control processors can thus be locked out from use by unauthorized host computers, and (b) to provide assorted features such as a base identification (ID) number and for maintenance control. The BCC is not mandatory when multiple hosts are connected to a base; however, it is useful. The base control card, however, can also be used when only a single host computer is connected to the UIO base module. Thus, the BCC is an independent and optional module, as is the line expansion module LEM.

Thus, in reference to Fig. 1, it should be stated that when a host computer is connected to a UIO base module, the base module must have at least one distribution card 110, Fig. 4A, for each host computer which is connected to it. Now, when a UIO base module is connected to a multiple number of host computers, then there is need for the base module to be provided with a unit known as the PSM or path selection module. The path selection module is the control unit which regulates the communication to and from the multiple number of distribution cards in the UIO base module.

In the development of line control processors, such as indicated in the prior cited patents and

6

references, it was found that the amount of logic required for adaptability to any given type of peripheral unit or to a variety of peripheral units required that expensive and space consuming logic circuitry be developed which would take large quantities of hardware and space requirements on printed circuit cards such that sometimes four or five extra logic cards were needed in order to complete a particular line control processor. Soon the cost and space requirements of these developments became prohibitive and better means were required for handling the variety of functions required of a line control processor.

In this situation a microprocessor-controller was developed which could handle all the basic logic for any variety of peripheral terminal units and which could be built with a minimum amount of components and placed on a single printed circuit card. This device was designated as the universal input/output state machine or UIO-SM. Thus, the UIO state machine could be built typically on a 112 chip circuit board and be placed within the slide-in card rack which is supported by the LCP base module (now called UIO base module). The UIO state machine can interface easily to any application dependent logic through its front plane and, except for power connections and clock connections, no connections needed to be made to the LCP or UIO base backplane. The universal I/O state machine is basically implemented in transistor type logic (TTL).

General overview of the universal I/O state machine

The UIO-SM has been made to implement a useful group of general purpose operators which include:

Arithmetic OP's

Logical OP's

Read/Write Memory OP's

PUT/GET OP's

Program Stack OP's (Branch, Call and Return)

In Fig. 2, there is shown a schematic diagram of a peripheral-controller for the I/O Subsystem of the present invention. The peripheral-controller is composed of a UIO State Machine 1 and an associated Application Dependent Logic Module $60_L$ which provides an external memory 90, control logic 66 and external registers 60 which connect to host system 10 and to peripheral 109 (via adapter $109_c$).

Referring to Fig. 2, the UIO State Machine 1 is seen to be provided with Instruction-Execution Logic 22, 23, 31, Memory Address Logic 40, 41, Data Manipulation Logic 32, 33, 34, and an internal program memory 50.

In Fig. 2 the Application Dependent Logic Module $60_L$ is connected by busses 10, 11, 12, 16 to the State Machine 1. The Logic Module $60_L$ provides an external memory 90 plus bus logic 66' and interface control logic 66 which includes an address decoder $66_{ad}$ for sensing addresses of "slow" elements, and an external register 60 which has bus connections to the Host System 10 and Peripheral Terminals such as 109.

At Figs. 2A and 2B there is seen an overall block diagram of the UIO state machine. The input/output lines at the bottom of the drawing are all front plane lines which connect to the peripheral's application dependent control (PDC) logic since it is desired that the UIO state machine itself be independent of any application type logic or of the special requirements of particular peripheral units.

Referring to the state machine block diagram of Figs. 2A and 2B there will be seen a series of interconnecting lines 16, $17_1$, $17_2$, 18, 10, 19, 11, 12 and 20, which connect to the application dependent logic $60_L$. These lines are labelled, such as the external memory data output bus 12, the I/O and memory write parity line 18, the memory address bus 16, the memory write enable 19 (and other functions listed on Fig. 2), the direct memory access (DMA) request line 11 (and other functions on Fig. 2), in addition to the main I/O bus 10. Line 15 is the instruction output bus from the program PROM 50.

A program counter 41, having input lines from stack memory 45 and I/O bus 10, via $10_f$, provides an output line which feeds an input signal to the program PROM 50 (internal memory 50). A memory reference register 40 (MRR) receives its input signals via I/O bus 10 from accumulator registers 30, memory operand 31, and the save-MRR 47 (memory reference register-save). Repetition counter 42 also receives an input line via I/O bus 10 for signals from accumulator registers 30 and memory operand 31.

The stack memory 45, controlled by stack pointer 46, provides an output line to the program counter 41. The repetition counter 42 provides an output which feeds back around line $10_f$ over to the I/O bus 10 and also around to the accumulator registers 30.

Attached and receiving input from the I/O bus 10 is a control register 1 designated as item 37, a control register 2 designated as item 38 and a parity register 39. The control registers 37, 38 provide buffering of signals to application control register lines $17_1$, $17_2$. The parity generator 39 has an output line 18 (part of I/O bus 10) and provides "I/O and memory write" parity.

The memory output data bus 12 from RAM external memory 90 connects to the memory operand register 31 whose outputs feed to ALU 32 and parity check circuitry 21 which has an output line 20 to provide memory read parity to external memory 90. Data bus 12 also provides an input to the instruction register 22 which has an output line connecting to the input of the instruction decoder-controller 23. Situated within instruction decoder-controller 23 are external flag registers $23_e$, interrupt mask $23_i$, and state counter $23_s$.

Accumulator registers 30 actually comprise two sets of eight registers, one set designated $30_f$ (foreground accumulator registers) and the other set as $30_b$ (background). Each of the 16 registers are addressed and selected by an address line $23_a$ from the instruction decoder-controller 23.

0 116 098

The I/O bus 10 provides a channel to the accumulator registers 30 which have an output to the B input of the arithmetic logic unit 32. Another input A to the arithmetic logic unit 32 comes from the memory operand register 31 which gets its input from external memory via the memory output bus 12, or from internal memory via bus 15.

The arithmetic logic unit 32 (ALU) has one set of outputs which feed to the "foreground" flag register 35 and another set of outputs to the "background" flag register 36. These flag registers 35 and 36 form an output which is fed to the instruction decoder-controller 23. They are used to signal "foreground mode" conditions for normal operation and "background mode" conditions for interrupts or emergency operation.

The F output of the arithmetic logic unit 32 feeds on a bus $10_i$ to the shift logic circuitry 33 and to the byte-swap circuitry 34. The outputs of these circuits 33, 34 connect to the I/O bus 10.

Summary: General operation

The PUT OP (operator) writes a 16-bit word (two bytes symbolized as AB) from the I/O bus 10 into a selected application dependent register 60 (external register), the particular register being addressed via GET-PUT address lines 19. The PUT OP can address any one of 32 application dependent registers. The GET OP reads a 16-bit word from a selected application dependent register 60 into an accumulator register 30 on the UIO-SM or into RAM memory 90 through the I/O bus 10. The GET OP can also address a selected one of the 32 application dependent registers 60 (external registers).

The UIO-SM has the ability to repeat certain OP's (PUT's, GET's and logical OP's) by loading a number N (from the software) into a repetition counter 42 to control the memory reference register (MRR) 40 which is used as a counter after having been loaded with the starting address of the data block to be used in the "repeated" OP. A more detailed discussion of this operation is presented hereinafter in connection with Fig. 2F.

In order to hold "PUT Data" for a longer period of time than can occur directly off of I/O bus 10, there are two 8-bit registers (control registers 37, 38) which have been placed in the UIO-SM. The strobing of these registers 37, 38 is under the control of the application dependent logic $60_L$ (Fig. 2).

A "WAIT line" (on bus 11) has been built into the UIO-SM such that when an external "slow memory" is addressed, the "slow memory" can force the UIO-SM to wait however long required for the Read or the Write to be valid. This is seen on Fig. 2 at bus 11 which feeds signals to the instruction decoder-controller 23. This line can also be used to halt the machine. A clock enable line on bus 11 (CLKENB) has been included so that the application dependent logic $60_L$ may control the state machine clock for single pulse operations and also direct memory access (DMA) operations. The timing for this signal is the same as the WAIT signal on bus 11.

As seen in the state machine diagram of Fig. 2, the UIO-SM can check via circuitry 21 for odd parity on each memory fetch. All memory fetches from external memory 90 come on the memory output data bus which is shown as bus 12 and which connects to instruction register 22 and to the memory operand register 31. All memory writes go out on the I/O bus 10 along with odd parity on line 18. The UIO-SM contains 8-K words of user-defined instruction programs in PROM 50 which is capable of being expanded to 64-K words.

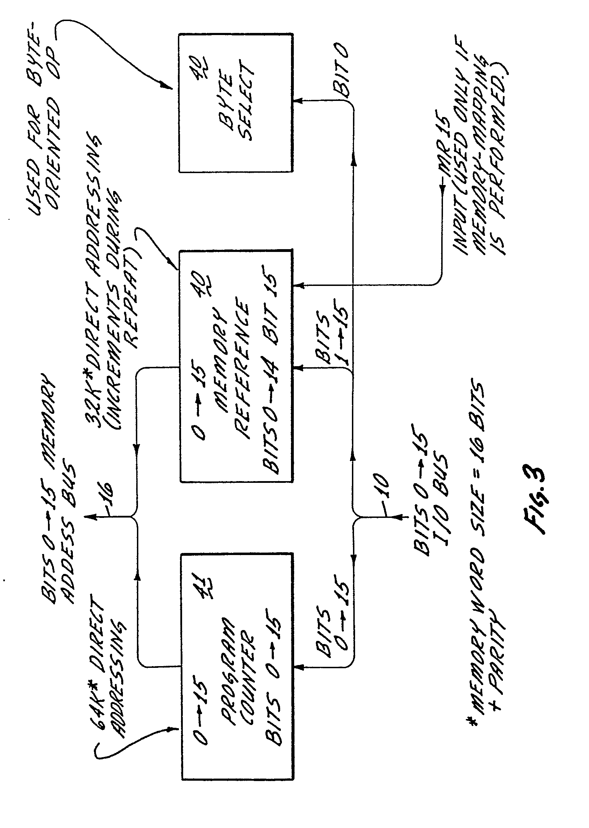

With reference to Fig. 3, it will be seen that memory addresses can come from two sources—the program counter 41 and the memory reference register (MRR) 40. The UIO-SM provides the ability to do condition and unconditional Branches, Calls and Returns. "Calls" can be nested up to 16 levels from stack memory 45. The memory reference register 40 stores addresses and is used (at certain times specified in instruction words) to address RAM data memory 90 which will provide programs applicable to the peripheral device connecting to the application dependent logic module $60_L$. This external memory 90 also serves to store data which is being transferred between the host computer and the peripheral terminal device. Since memory 90 and 50 are organized two bytes wide (16-bits plus parity) but the data for transfer is sometimes required in single byte form, as for peripherals such as card readers, the memory reference register (MRR) 40 has been designed such that only the high order 15-bits are used to address memory 90. The low order bit (BYTESWP) is used by the byte-oriented read/write OP's to determine whether or not to byte-swap the two byte data word before storage into accumulator registers 30 on an "external data memory read" or before storage into external RAM data memory 90 on a "data memory write". This particular feature permits the UIO-SM to easily handle byte-oriented data in that the desired byte is automatically read into the "low order" byte position of the accumulator registers 30 on "data memory reads", as well as being automatically written from the "low order" byte position into the correct byte position on "data memory writes". The "high order" byte position of the accumulator registers 30 must contain the last byte written, if any is present.

In Table I there is shown the instruction format for the UIO-state machine operators. The external memory output data bus 12, or internal memory instruction bus 15, provides 17 bits designated 0—16. The bus bits 0—7 (low order) constitute the "B" byte while the bus bits 8—15 constitute the "A" byte (high order).

8

TABLE I
Instruction format for UIO-state machine operators

| Field | Field specifier | Bus bit on instruction bus 15 and memory data bus 12 |
|---|---|---|
| Odd parity | P | 16 |
| Basic function | F1 | 15 |
|  | F0 | 14 |
| Function variant | V4 | 13 |
|  | V3 | 12 |
|  | V2 | 11 |
|  | V1 | 10 |
|  | V0 | 9 |
| Destination specifier (or misc. control) | D3 | 8 |
|  | D2 | 7 |
|  | D1 | 6 |
|  | D0 | 5 |
| Source accumulator | S2 | 4 |
|  | S1 | 3 |
|  | S0 | 2 |
| Memory address source for operand of instruction | M | 1 |
| Copy ALU output to memory reference register | C | 0 |

Bus bit 15—8="A" byte
Bus bit 7—0="B" byte

| F field | | V field | | | | | D field | | | | S field | | | | |
|---|---|---|---|---|---|---|---|---|---|---|---|---|---|---|---|
| P | F1 | F0 | V4 | V3 | V2 | V1 | V0 | D3 | D2 | D1 | D0 | S2 | S1 | S0 | M | C |
| 16 | 15 | 14 | 13 | 12 | 11 | 10 | 9 | 8 | 7 | 6 | 5 | 4 | 3 | 2 | 1 | 0 |

A byte — B byte

As will be seen from Table I certain fields are specified such as the P field for odd parity, the basic function field F1, F0, and function variant field by V4—V0. The destination specifier field is designated D3—D0; the source accumulator field is designated S2, S1, S0. The field which causes selection of the memory address source to be used in fetching the operand of the instruction is designated M; while the function field for copying the arithmetic logic unit output into the memory reference register 40 is designated by the field C.

The odd parity bit is set such that an odd number of 1's will exist across the entire 17-bit instruction (or the operand). The basic function field F1, F0 is described in Table II such that various binary digit combinations of F1, F0 provide certain functions as shown.

TABLE II
Basic function

| F1 | F0 | Function |
|---|---|---|
| 0 | 0 | Contents of external register to accumulator or external RAM memory (GET) |
| 0 | 1 | Contents of accumulator or external RAM memory to external register (PUT) |
| 1 | 0 | ALU operators |
| 1 | 1 | Program stack operators (branch, call, return) |

For example, the GET function provides for the transfer of the contents of an external register 60 to the accumulator 30 or to RAM memory 90. The digital bits 0, 1 provide for the transfer of the contents of an addressed register in accumulator 30 (or an addressed portion of external RAM memory 90) to the external registers 60. This is called the PUT function. The F field bits 1, 0 provide for execution of the arithmetic logic unit operators; while bits 1, 1 provide for the functions of the program stack (45) operators such as Branch, Call, Return.

Table III shows the function variant field V4—V0 and its relation to the function field F1, F0.

TABLE III
Function variant

| F1 | F0 | · | V4 | V3 | V2 | V1 | V0 | Field description |
|---|---|---|---|---|---|---|---|---|
| 0 | 0 | | [ | | R(N) | | ] | External register address (GET) |
| 0 | 1 | | [ | | R(N) | | ] | External register address (PUT) |
| 1 | 0 | | [ | | ALU OP | | ] | ALU Op code |
| 1 | 1 | | [ | | (OP) (TEST) | | ] | Program stack Op code and condition test specifier (conditions from flag register) (ICall & IRet are unconditional operators) |

OP=00 IRet
OP=01 Call
OP=10 Branch
OP=11 Return or ICall

Test=000 Unconditional
Test=001 ALU=0
Test=010 ALU MSB=0
Test=011 ALU Carry=1
Test=100 ALU LSB=0
Test=101 External Flag 1=1
Test=110 External Flag 2=1
Test=111 External Flag 3=1

Note: The Program Stack OP's can Execute on Condition Test True or Not True depending on the Destination Specifier. IRet and ICall execute Unconditionally.

For example, the F-bits 0, 0 specify a GET operation from an external register address while the F-bits 0, 1 specify a PUT operation into an external register of a specified address.

Table IV shows the destination specifier field, D3, D2, D1, D0.

# 0 116 098

TABLE IV
Destination specifier (or misc. control)

| D3 | D2 | D1 | D0 | Destination (or misc. control) |
|----|----|----|----|--------------------------------|

**(i) GET and ALU OP's**

| D3 | D2 | D1 | D0 | Destination (or misc. control) |
|----|----|----|----|--------------------------------|
| 0 | 0 | 0 | 1 | Null, no destination—used to update flag register only (ALU Op's only) |
| 0 | X | X | 0 | Write RAM memory (GET and ALU Op's) |
| 1 | [ | A(D) | ] | Destination accumulator A(D) (GET and ALU Op's) can be same as Source accumulator A(S) |

**(ii) PUT and program stack Op's**

| D3 | D2 | D1 | D0 | | Destination (or misc. control) |
|----|----|----|----|----|--------------------------------|
| S | X | F | F | S=0 | Operand source from memory (PUT and program stack Op's) |
| | | | | S=1 | Operand source from source accumulator A(S) (PUT and program stack Op's) |
| | | | | FF=00 | Application dependent strobe No. 1 (PUT Op) |
| | | | | FF=01 | Application dependent strobe No. 2 (PUT Op) execute on condition test true (program stack Op) |
| | | | | FF=10 | Application dependent strobe No. 3 (PUT Op) execute on condition test not true (program stack Op) |
| | | | | FF=11 | Load repetition count register (repeat register 42) (PUT Op) |

X=Don't care

This D3—D0 field is subdivided into (i) GET and ALU OP's and (ii) PUT and program stack OP's. In the case of (i) there may be no destination specified; or only a miscellaneous control field may be used to update the flag register; or the destination may be the RAM memory 90.

In the case (ii) for the destination field, the operand source may come from RAM memory 90; or the operand source may be from the source accumulator 30; or the destination may be a load into the repetition counter 42.

The Source Accumulator Field S2, S1, S0 is shown in Table V below:

TABLE V
Source accumulator A(S) field S2, S1, S0

(i) ALU or PUT
    [A(S)]    Operand from source accumulator A(S)
              [can be same as destination accumulator A(D)]

(ii) GET
    S=XX0    Application register 60 is source
    S=XX1    Repetition counter 42 is source

(iii) Program stack OP's
    V=11CCC & S=XX0    Return operator
    V=11XXX & S=XX1    ICall operator (forced by interrupt hardware)

The source accumulator field specified as S2, S1, S0 (Table V) may apply (i) to the ALU or the PUT Op where the operand from the source accumulator A(S) can be the same as the destination accumulator A(D); or (ii) where the GET Op can function so that the source is an external application register 60 or that the source is the repetition counter 42; or wherein (iii) the program stack Op's can provide a return operator or an ICall operator.

M field specifier: selecting memory address source for the operand of an instruction:
The M field specifier (as originally noted in Table I) may occur as one of two binary states, that is a 0 or as a 1. When M is 0, then the operand for this instruction is located one address beyond this instruction

11

(PC+1, program counter plus 1) or there is no operand. If the instruction does not require a memory operand, then PC+1 is not used for an operand; the next "instruction" will be at PC+1 (no space is allowed for an operand). The operators that do not use an operand are listed as follows:

1. All "GET" operators;
2. "PUT" operators with D3=1;
3. "CALL" or "BRANCH" with D3=1;
4. ICALL, RETURN, IRETURN, ROTR, SHFL, SHFR, CMA, ONES, ZERO, SWAC, WRTW, WRTB, DRTL, EI, DI and RSTK operators. (These operators are discussed subsequently hereinafter).

When the M field bit is "1", then the operand for this instruction is addressed by the memory reference register 40 (MRR) or else there is no memory operand for this instruction.

C Field: For copying ALU output to the memory reference register 40:

The C field originally shown in Table I may read as a 1 bit or a 0 bit. In the 1 bit situation this means that the machine will not copy the ALU output to the memory reference register 40; however, if the bit is "0", then the ALU output will be copied on to the memory reference register 40. The C bit can be set to 0 on all instructions except GET's and RDB, RDBW, RBWR, SWAC and WRTB. These operators are discussed subsequently hereinafter.

Flag registers:

Two flag registers are provided so that at least one flag register is fully available for each of the two operating modes. Thus, flag register 35 is the "foreground mode" flag used under normal operating conditions while register 36 is the "background mode" flag which is used during interrupt or other unusual conditions. As seen in Fig. 2, flag registers 35, 36 receive output from the arithmetic logic unit 32 and provide an output line to feed input to the instruction decoder-controller 23. The flag register is updated at the end of all ALU operators (which include arithmetic OP's, logical OP's and load/store/move OP's). On OP's which "byte swap" the ALU 32 output before storage into the destination location, the flag register is updated on the basis of the full two bytes of information from the ALU 32 after being swapped. In the specific cases of REBW OP (read before write byte) and the RBWR OP (read before write byte reversed), a full memory word is read into the UIO state machine, but only one of the two bytes read is written into accumulator register 30 (the low order byte of the accumulator destination register remains unchanged). The flag registers (35, 36) are updated on the basis of the full word read from RAM memory 90.

As indicated in Fig. 2, the accumulator registers 30 actually constitute two different sets of eight registers. One set $30_f$ of accumulator registers is for normal operating conditions (foreground mode) while the other set $30_b$ of eight accumulator registers is for abnormal conditions (background mode) as during interrupts.

Instruction repetition:

The use of the repetition counter 42 provides an instruction repetition feature where a PUT or a GET OP may be repeated up to 256 times by the use of a PUT OP to load the repetition counter 42 which must be followed by the PUT or the GET OP to be repeated. Any value N from 0 to 255 (from the software) may be loaded into the repetition counter 42 and N+1 operations will be performed (1 to 256). The address source for the repeated PUT data or the address destination for the repeated GET data is found in MRR 40 and thus these addresses will originate from the memory reference register 40 and not from the program counter 41 (PC+1). In other words, the M-bit is set to "1" in the repeated PUT or GET. After each PUT or GET Ops, the hardware will increment the MRR 40 in preparation for the next PUT or GET. When repeated, each individual PUT or GET will execute in one clock period, unless the PUT or GET addresses a "slow memory", in which case there will be one extra clock period at the beginning of the repeated PUT's or at the end of the repeated GET's.

The use of the repeated PUT's or GET's serves to greatly increase code compaction while also greatly increasing the speed of the clock transfers to or from RAM memory 90.

Any logical OP (AND, CMA, CMM, OR, XOR, ONES, ZERO, ADDC, SUBC, etc. as described hereinafter) may be repeated up to 256 times by the use of a PUT OP to load the repetition counter 42 which must be followed by the logical OP to be repeated. Any value of N from 0 to 255 may be loaded into the repetition counter 42 and N+1 operations will be performed (1 to 256). For the repeated OP to work as expected, the source accumulator 30 should be equal to the destination accumulator 30. The address source for the operand data should originate from the memory reference register 40 (MRR) just as for the repeated PUT or GET. After each OP of the repeat sequence is executed, the hardware will increment MRR 40 in preparation for the next OP. When repeated, each individual logical OP will execute in one clock period, unless the operands are located in a "slow memory".

One particular case, where a repeated logical OP can increase code compaction and execution speed, is the use of the repeated "Exclusive OR" for the purpose of generating longitudinal parity on a data block located in external memory 90.

The PUT OP which loads the repetition counter 42 must have the N value in the "B" byte (low order 8-bits) of the PUT data. The "A" byte (high order 8-bits) is a "don't care".

The application dependent logic $60_L$ has the capability of stopping instruction repetition even though the full number of operations has not occurred, as will be later discussed in connection with Fig. 2F.

The capability exists to do repeat operations with PC (program counter 41) used for the memory operand source address (M-bit equal to 0). In this case, PC 41 will increment during the repeat operation instead of MRR 40 (provided that the operator does use a memory operand). Using PC 41 during the repeated operations will allow the use of a multiple word literal following the single repeated operator. The size of the "literal" field must be exactly the number of words specified by the repeat count value plus 1 word. The HLT REP/interface line (halt repetition) must remain "high" during all repeat operations using PC 41 as an address source for operand data.

In regard to the instruction execution speed, the basic clock rate for the UIO-SM is 8 MHZ (125 nanosecond clock period). All OP's, with the exception of the program stack operators, execute in two clock periods except such OP's that write from the UIO-SM accumulators 30 into RAM memory 90 (3 clocks required) or have operands to be fetched from or stored into "slow memory" (three or more clocks required). The program stack operators require 3 clock periods to execute if the condition is true (Branch or Call "executed") and only require 2 clock periods if the condition is false (Branch or Call "not executed"). The NO-OP executes in 2 clock periods. The OP IReturn executes in 3 clock periods, while Load and Store Accumulator executes in 4 clock periods.

The execution of any given instruction requires an "instruction fetch" along with the above-noted execution cycles; however, in the case of the UIO-SM, the instruction fetch for the next instruction is performed during the last execute cycle of the current instruction. Therefore, the "instruction fetch" is masked from the timing.

The NO-OP:

The NO-OP consists of any program stack operator (such as Branch) with the condition test field set to "UNCONDITIONAL" and the destination specifier set to "EXECUTE ON CONDITION TEST NOT TRUE" (Branch never). Whether or not the NO-OP occupies one or occupies two memory locations, is a function of whether or not the operand (Branch never address) is located next to the instruction (PC+1) or is addressed by the memory reference register 40 or comes from an accumulator 30. The flag registers 35, 36 will not be updated on the NO-OP.

Clear sequence:

The clear sequence is a "zeroing" operation. When a "Clear" is issued to the UIO-SM, the program counter 41, the repetition counter 42, and the stack pointer 46 are reset to zero, and an instruction is fetched. After a "Power-up Clear" has been issued, the accumulators 30 cannot be predicted. However, if a "Clear" is issued while power remains up, the accumulator registers 30 will retain their states just previous to the "Clear". While "Clear" is true, at least two clocks must be issued; after "Clear" has gone false, one clock is required before execution of the first instruction begins.

Output control registers:

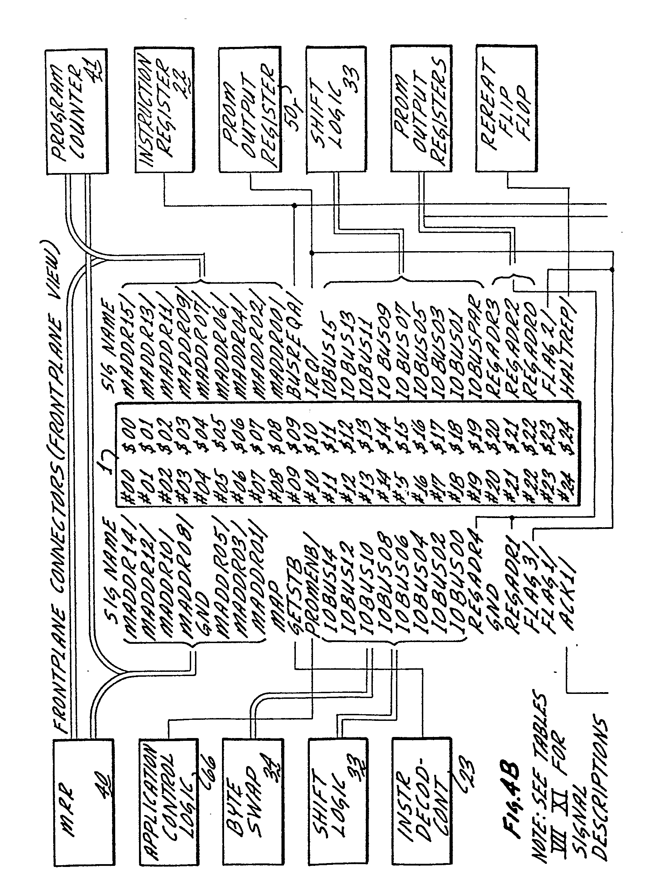

There are two output control registers 37 and 38 in the UIO-SM as seen in Fig. 2. These can be used by the application dendent logic $60_L$ to hold "PUT Data" for a longer period of time than can normally occur directly off of the I/O bus 10. Both output control registers 37 and 38 are 8-bits wide and have their data inputs connected to the low order 8 bits of the I/O bus 10 ("B" byte). Both of these output control registers must be clocked by the application dependent logic $60_L$. Fig. 5 illustrates a preferred method for clocking the output control registers 37 and 38. A triple input NAND gate 74 in Fig. 5 has three input line signals: PUT STROBE/ signal; address signals for an external register (60 of Fig. 2); and the clock signal. These signals are correlated in Fig. 5.

Once clocked by a leading edge, the outputs of these registers will stabilize in 17 nanoseconds or less. A Schottky TTL NAND device 74 is used for the control register clock generator since the "PUT Data" can be guaranteed for only 10 nanoseconds past the leading edge of CLOCK as received on the UIO-SM, and the output control registers require a data hold time of 2 nanoseconds minimum past the leading edge of their clock.

Memory addressing and expansion:

In the preferred embodiment and without expansion of memory, the UIO-SM has the capability of directly addressing 0 to 64K words of program memory 50, Fig. 2, and from 0 to 32K words of data memory in RAM 90. To facilitate any further expansion of memory, such as by using paging techniques or otherwise, the enabling of the program PROM 50 in the UIO-SM can be controlled by an expanded memory in the application dependent logic $60_L$.

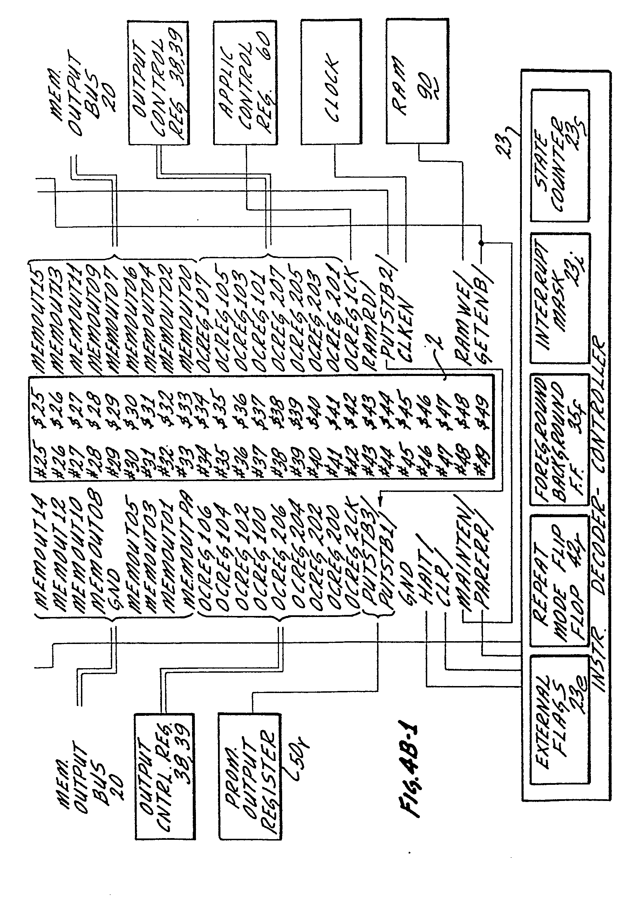

Fig. 6 illustrates how such an expanded memory can control the enabling of the UIO-SM program PROM 50 through the use of a front-plane external signal. If the expanded memory drives this signal to a "high" level, the UIO-SM program PROM 50 will be disabled. If the application dependent logic $60_L$ does not have a requirement for expanded memory, then it will simply tie this line to a logic "low". In Fig. 6, a 5-input NOR gate 75 has inputs from program counter 41 in order to provide a parity disable signal (high) to disable PROM 50.

The UIO-SM program PROM 50 may be expanded from 8K up to 64K words by using different size PROMs. The chip select and the addressing functions of the PROM 50 are automatically adjusted without circuit changes. A jumper arrangement is used to enable the parity bit output for the size of the program memory being used. With reference to Fig. 6, jumpers can be installed according to the following Table VI for each word size of PROM shown below.

TABLE VI

| 8K PROM — A15 to MADR 15 |
|---|
| A14 to MADR 14 |
| A13 to MADR 13 |

| 16K PROM — A15 to MADR 15 |
|---|
| A14 to MADR 14 |
| A13 to GND |

| 32K PROM — A15 to MADR 15 |
|---|
| A14 to GND |
| A13 to GND |

| 64K PROM — A15 to GND |
|---|
| A14 to GND |
| A13 to GND |

The UIO-SM receives its clock signal from the backplane of the UIO base module. To receive clock signals, the UIO-SM preferably uses Schottky type flip-flops followed by Schottky type inverters in order to generate the internal UIO-SM clock (CLOCK). All the timings are relative to this internal clock which preferably has a minimum delay of four nanoseconds and a maximum delay of 13 nanoseconds from the clock on the backplane. In order to insure minimum clock skew between the application logic $60_L$ and the UIO-SM, the application logic $60_L$ is preferably made to use the same type of devices to receive and distribute the clock.

The following paragraphs will illustrate detailed timing and explanation for the interface between the UIO-SM and the application dependent logic $60_L$.

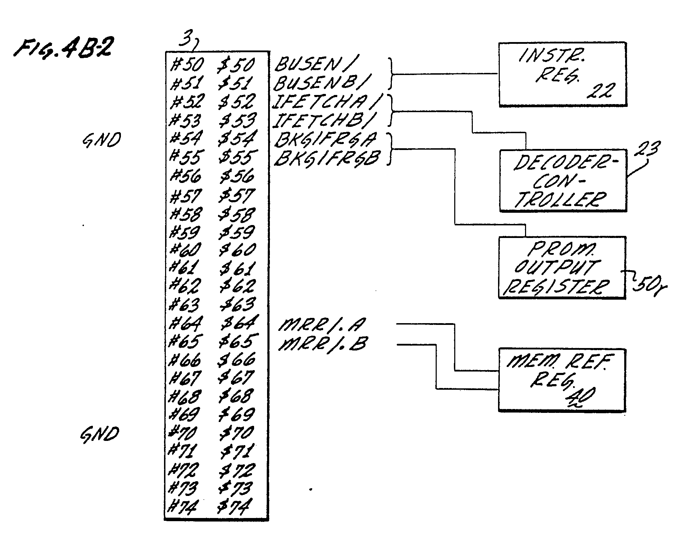

Referring to Fig. 7, which is entitled "Clear Line Timing", it will be seen that in order to initialize the UIO-SM, the CLEAR line must be "true" (active low) for at least two full clock periods.

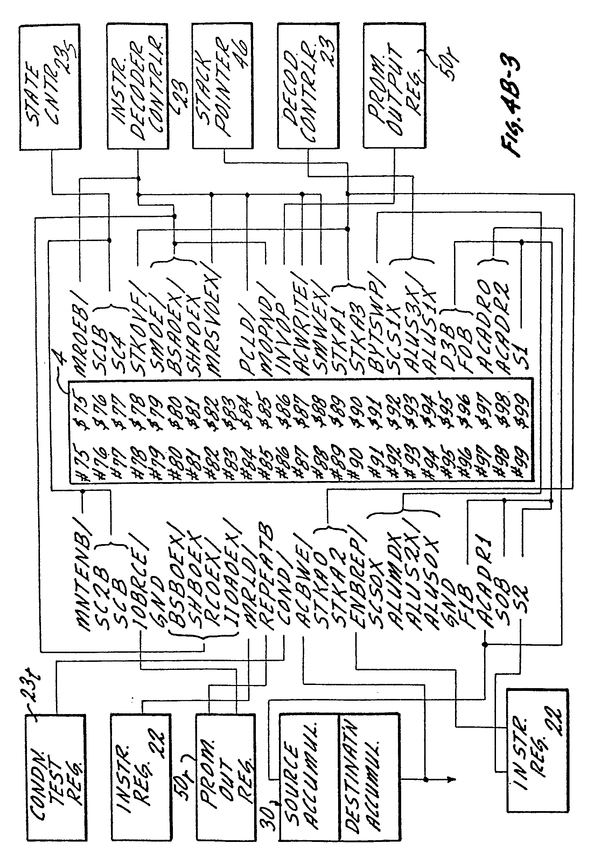

Another feature implemented into the UIO-SM is the WAIT line (WAIT/). This is used such that when "slow memory" is addressed, the slow memory can force the UIO-SM to wait however long required for the "read" or the "write" to be valid. This line can also be used to halt the machine for any length of time required. The timing requirements for the WAIT/line are illustrated in Fig. 8. Since this line has multiple sources, including one line on the UIO-SM itself, it must be driven by an open-collector (TTL device).

Referring to Fig. 8, the state machine processor has a clock signal derived from the backplane of the base module. This clock, when not disabled, will execute data transfers from the I/O bus to external devices at the clock rate. But this rate would be too rapid for "slow" external devices to accept the high speed rate of the micrprocessor.

The application dependent logic module $60_L$ (Figs. 2A—2B) has Control Logic 66 (with an internal Address Decoder, Fig. 2) which recognizes any addresses directed to the external memory/external register means. These types of addresses originate from the memory reference register 40 or the instruction register 22. Upon recognition of addresses directed to external devices (external memory/external register means) the Control Logic 66 will initiate the WAIT signal to the microprocessor system which will "disable" the clock for one or more clock cycles. Thus, data to be transferred from the I/O bus will be held until the clock signal resumes. Depending on the "slowness" of the external devices, the WAIT signal can be programmed or set to disable 1, 2, . . . x clock cycles, thus to delay data transfer from the I/O bus 10 to the external devices.

In addition, if the external devices are busy (not ready) the Control Logic 66 is connected to sense this, and can further maintain the WAIT signal longer until the external device is "ready" (not busy).

When the WAIT signal is shut off by the Control Logic 66, then the clock signal in the microprocessor system resumes, and data transfers again are effectuated.

A CLOCK enable (CLOCKENB) line is implemented on the UIO-SM for use in single pulse or for direct memory access (DMA) functions. The timing here is the same as the WAIT/ of Fig. 8.

GET/PUT Timings:

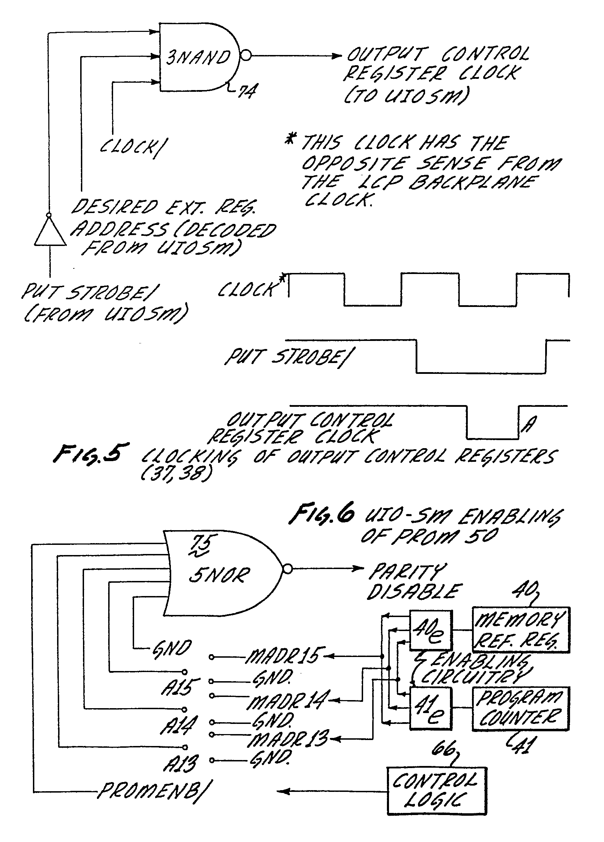

The timing relationships for the non-repeated GET's and PUT's are illustrated in Fig. 9. The WAIT line can be used on the GET to increase the memory write time in the case of a "slow" write memory. Another application for use of the WAIT line on GET's is to increase the amount of time available for the application dependent logic $60_L$ to drive the "GET DATA" and meet set-up times after having received the GET enable signal.

In the case of the PUT OP, the effect of the WAIT line is to increase the period of time that "PUT DATA" is on the I/O bus 10, although the UIO-SM would be halted during this time. It should also be noted that the timing of the PUT Strobe can only be guaranteed relative to the CLOCK signal and not relative to the PUT DATA. As such, neither edge of the PUT Strobe is used to directly clock the PUT Data into an application dependent register 60.

The first transfer of data in a "repeated" GET to an addressed register in accumulator 30 will be invalid. All data transfers (after the first) will be valid. The same accumulator register 30 is addressed as a "destination" for each repeat GET operation.

If M=1 (refer to Table I), the memory reference register 40 will be incremented during each repeat GET operation, even though external RAM memory 90 is not used by the GET operator.

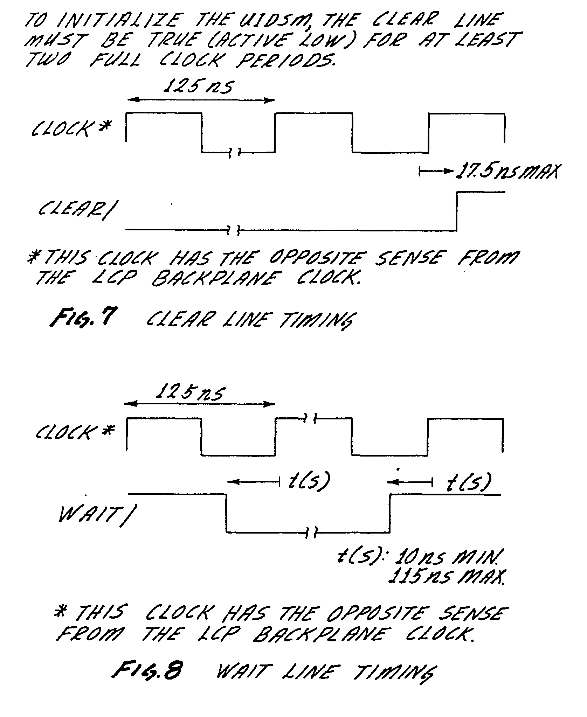

The timing relationships for repeated GET's and repeated PUT's are shown in Fig. 10. Specifically this timing chart further illustrates when repeated "GET Data" can change and when repeated "PUT Data" will also change.

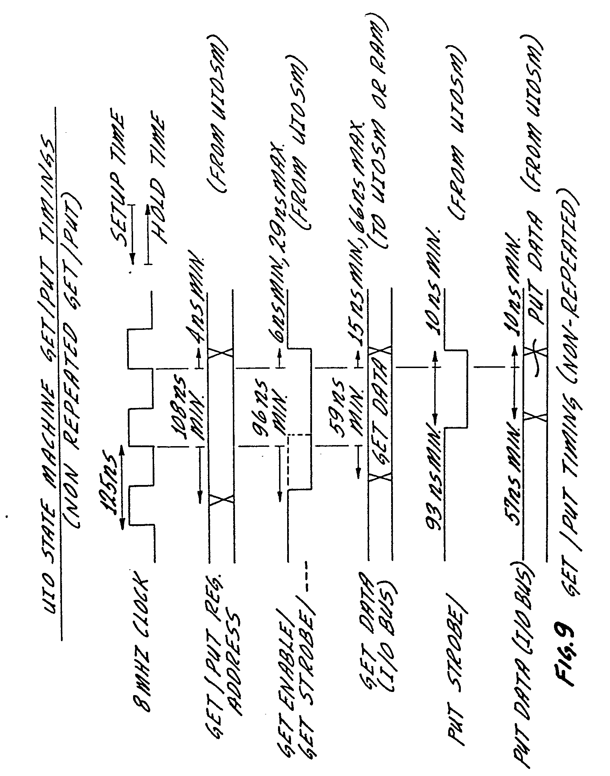

The timing relationships for memory "Reads" in the UIO-SM are shown in Fig. 11. The WAIT line has been utilized on one of the memory reads to illustrate how one (or more) extra clock periods can be inserted after address stabilization to allow "slow access" memory to meet the setup time requirements of the UIO-SM.

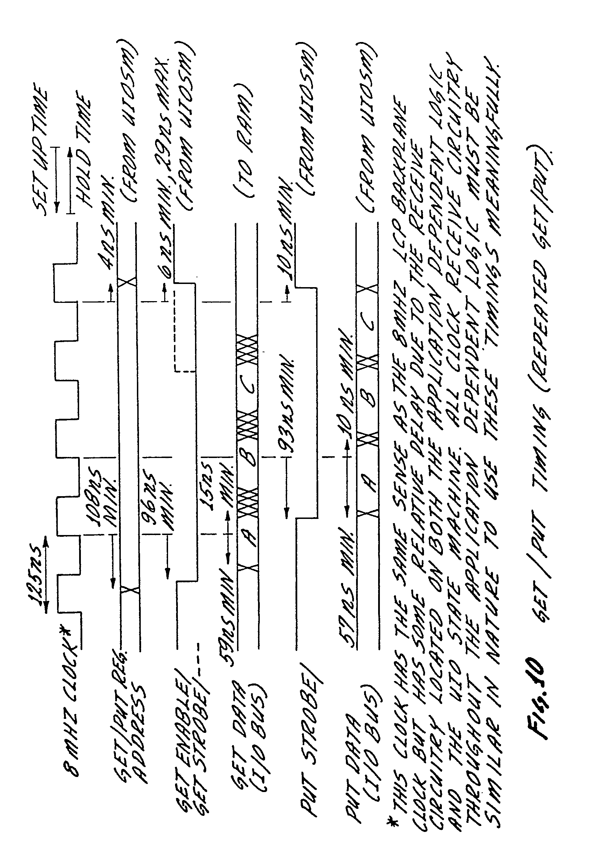

In regard to the memory "Write" timings for the UIO-SM, these memory Writes are shown in Fig. 12. UIO-SM instructions which can do memory Writes are: WRTW (Write Word), WRTB (Write Byte), and also GET. The WAIT line 11 has been utilized on one of the memory Writes to illustrate how one (or more) extra clock periods can be inserted after address stabilization in order to allow "slow" Write Memory an adequate Write time.

Halting "Repeated" instructions:

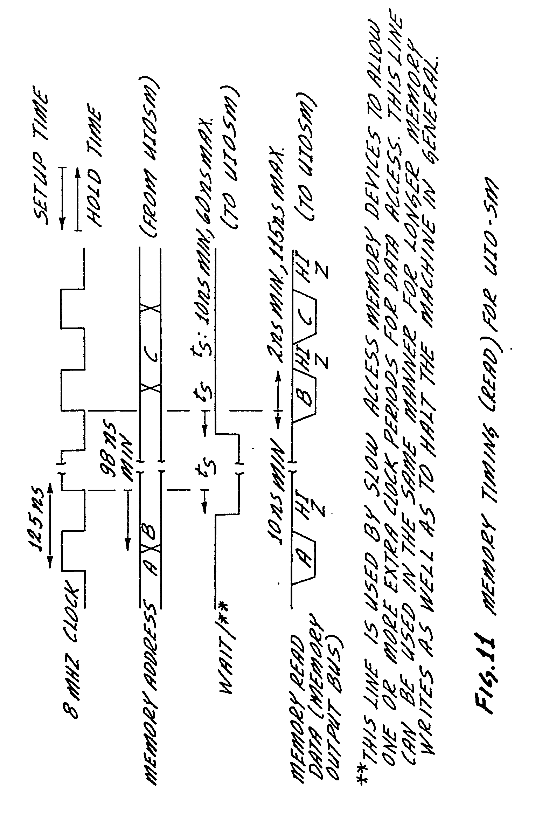

Although the total number of operations on a repeated instruction may not be completed, the repeated instruction itself can be halted by the application dependent logic $60_L$. The application dependent logic produces the signal HLTREP/ (active low), which is the signal to the UIO-SM that halts the repetition. In Fig. 13 there is shown the timing of this signal. If the application dependent logic $60_L$ has no requirement for halting repeated instructions, then the application dependent logic can simply leave the HLTREP/ signal unconnected.

When the HLTREP signal goes false, the current processing operation will be completed and a fetch of the next instruction is started at the "high" clock transition. The HLTREP/ line must remain "high" during repeat operations using the program counter (PC) 41 to address the memory operands (M bit=0).

Parity error line: ·

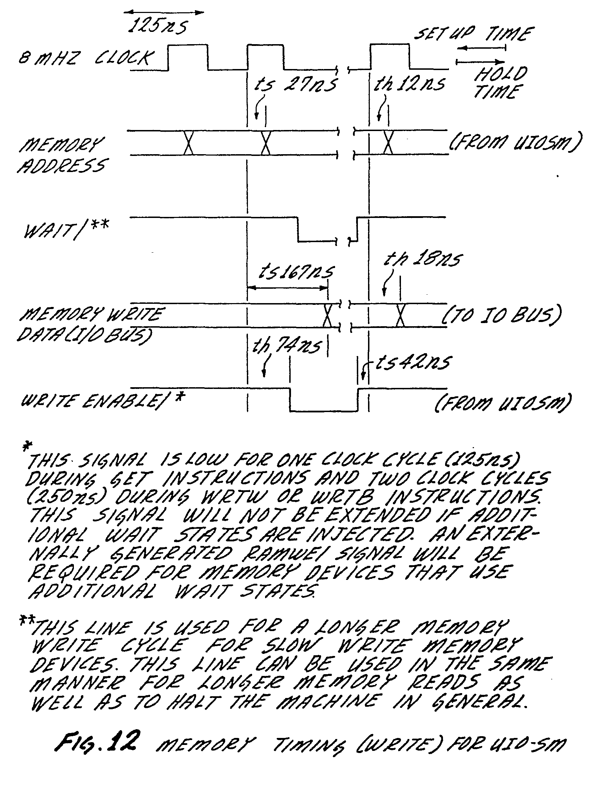

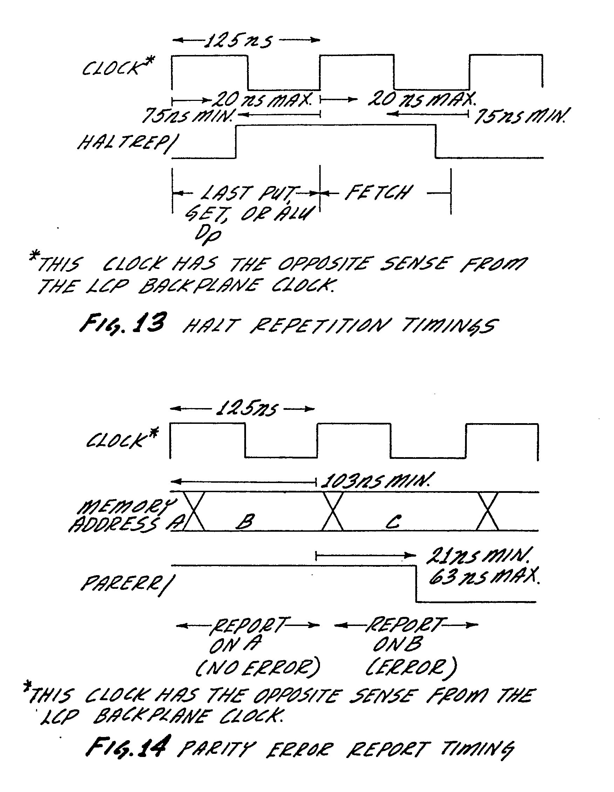

On every memory fetch the UIO-SM checks for odd parity and signals the results to the application dependent logic $60_L$. If incorrect parity is detected, the UIO-SM takes no action other than to signal the error to the application dependent logic $60_L$. This timing of the parity error line PARERR/ is shown in Fig. 14.

Referring to Fig. 3 and to the memory reference register 40 (MRR) there is a line which is used by external memory mapping logic to control address bit 15 of the memory reference register 40. This line is designated as MRR 15 and the state of this line is loaded into MRR 40 at bit 15 whenever a loading of memory reference register 40 is called for by a UIO-SM instruction. The state of this line should be stable for at least 30 nanoseconds prior to the high transition of the clock to ensure that it can be properly loaded. This line is tied to ground (low side) if memory mapping is not used.

There is a line designated IRQ/ on bus 11 which line is the "interrupt request line". This line is driven "low" preferably by an open-collector device in order to request an interrupt of the UIO-SM. The UIO-SM will only recognize an interrupt request if the interrupt mask is reset (EI instruction executed, Table XII-F, for resetting the interrupt mask bit) and an instruction fetch has just been completed when not in repeat mode (high clock transition at end of T0 and the start of T1).

The UIO-SM responds to an interrupt by forcing execution of an ICALL instruction and switching the UIO-SM "background" mode "on". The ICALL instruction generates an acknowledge signal (ACKI/) in order to allow the application logic $60_L$ to place an interrupt call address on the I/O bus 10. The ICALL instruction saves the memory reference register 40 data in the MRR save register 47 and it saves the old PC (program counter) value on the stack before loading PC with the call address (placed on the I/O bus 10 by the application logic $60_L$). Further interrupts are inhibited in the "background" mode and the duplicate set of flags (35) and accumulators ($30_f$) are used so that the "foreground" operating environment is preserved therein.

A return to the "foreground" mode is accomplished by executing an IRET instruction. The top value from the stack memory 45 is placed in the program counter PC 41 for the return address and the contents of the MRR save register 47 is placed into the memory reference register MRR 40. The original foreground flag 35 and foreground accumulator $30_f$ are again made active and contain the same values as before the interrupt. The clear line will place the UIO-SM in the "foreground" mode and set the interrupt mask to disable interrupts. The IRQ/line must be stable at least 60 nanoseconds before the leading edge (high transition) of the clock signal.

The DMA request line 11 of Fig. 3 is a line which is driven "low" by the application dependent logic $60_L$ in order to isolate the UIO-SM address outputs on memory address bus line 16 so that direct memory access (DMA) logic can drive this bus. This line is left unconnected when not using the DMA.

The bus enable line (BUSEN/LINE) from Control Logic 66 is driven "low" by the application logic $60_L$ in order to enable the I/O bus drivers on I/O bus 10, including data, GETENB, PUTSTB and REGADR signals. The GETENB is a signal used to indicate that GET data is driven on to the I/O bus 10; the PUTSTB is the signal used to indicate that PUT data is on the I/O bus 10; the REGADR signal is the signal used to indicate the enabling of the external register address lines for GET's and PUT's. When "high", this line disables all I/O signals. This line is tied to "low" if it is not used.

Universal input/output state machine front plane interface:

The front plane connectors (Fig. 4A, Fig. 4B-1, 4B-2) which provide the interface for the UIO-SM are preferably four in number wherein each of the four front plane connectors provides 25 pin connections on each of two sides of each front plane connector. The following Tables VII—X show the signal name for each pin number for each side of the four front plane connectors.

TABLE VII
(Connector No. 1) (See Fig. 4B-1)

| PIN number | $ Side* signal name | # Side* signal name |
|---|---|---|
| 00 | MADDR15 | MADDR14 |
| 01 | MADDR13 | MADDR12 |
| 02 | MADDR11 | MADDR10 |
| 03 | MADDR09 | MADDR08 |
| 04 | MADDR07 | GND |
| 05 | MADDR06 | MADDR05 |
| 06 | MADDR04 | MADDR03 |
| 07 | MADDR02 | MADDR01 |
| 08 | MADDR00 | MRR15 |
| 09 | BUSREQ/ | GETSTB |
| 10 | IRQ/ | PROMENB/ |
| 11 | IOBUS15 | IOBUS14 |
| 12 | IOBUS13 | IOBUS12 |
| 13 | IOBUS11 | IOBUS10 |
| 14 | IOBUS09 | IOBUS08 |
| 15 | IOBUS07 | IOBUS06 |
| 16 | IOBUS05 | IOBUS04 |
| 17 | IOBUS03 | IOBUS02 |
| 18 | IOBUS01 | IOBUS00 |
| 19 | IOBUSP AR | REGADDR4 |
| 20 | REGADDR3 | GND |
| 21 | REGADDR2 | REGADDR1 |
| 22 | REGADDR0 | FLAG3/ |
| 23 | FLAG2/ | FLAG1/ |
| 24 | HALTREP/ | ACKI/ |

*Note: One side of connector is designated $ while the other side is designated #.

# 0 116 098

TABLE VIII
(Connector No. 2) (See Fig. 4B-1)

| PIN number | $ Side signal name | # Side signal name |
|---|---|---|
| 25 | MEMOUT15 | MEMOUT14 |
| 26 | MEMOUT13 | MEMOUT12 |
| 27 | MEMOUT11 | MEMOUT10 |
| 28 | MEMOUT09 | MEOUT08 |
| 29 | MEMOUT07 | GND |
| 30 | MEMOUT06 | MEMOUT05 |
| 31 | MEMOUT04 | MEMOUT03 |
| 32 | MEMOUT02 | MEMOUT01 |
| 33 | MEMOUT00 | MEMOUTPA |
| 34 | OCREG107 | OCREG106 |
| 35 | OCREG105 | OCREG104 |
| 36 | OCREG103 | OCREG102 |
| 37 | OCREG101 | OCREG100 |
| 38 | OCREG207 | OCREG206 |
| 39 | OCREG205 | OCREG204 |
| 40 | OCREG203 | OCREG202 |
| 41 | OCREG201 | OCREG200 |
| 42 | OCREG1CK | OCREG2CK |
| 43 | RAMRD/ | PUTSTB3/ |
| 44 | PUTSTB2/ | PUTSTB1/ |
| 45 | CLKEN | GND |
| 46 | unused | WAIT/ |
| 47 | unused | CLEAR/ |
| 48 | RAMWE/ | unused |
| 49 | GETENB/ | PARERR/ |

18

**0 116 098**

TABLE IX
(Connector No. 3) (See Fig. 4B-2)

| PIN number | $ Side signal name | # Side signal name |
|---|---|---|
| 50 | BUSEN/ | |
| 51 | BUSEN/ | |
| 52 | IFETCH/ | |
| 53 | IFETCH/ | |
| 54 | BKG/FRG | |
| 55 | BKG/FRG | |

Note: Figs. 4B-1 and 4B-2 show in more detail the connectors 1, 2, 3, 4 of Fig. 4A.
In addition to the microprocessor system elements shown in Fig. 2, Fig. 4B-1 indicates the connections to the PROM output registers $50_r$ and sub-elements of the instruction decoder-controller such as the repeat-mode flip-flop $42_r$ and foreground-background flip-flop $35_f$. Fig. 4B-2 shows further connections to the microprocessor system and includes a condition test register $23_t$.

**0 116 098**

TABLE X
(Connector No. 4) (See Fig. 4B-2)

| PIN number | S Side signal name | # Side signal name |
|---|---|---|
| 75 | MROEB/ | MNTENB/ |
| 76 | SC1B | SC2B |
| 77 | SC1B | SC8 |
| 78 | STKOVF/ | |
| 79 | SMOE/ | GND |
| 80 | BSAEOX/ | BSBOEX/ |
| 81 | SHAOEX | SHBOEX |
| 82 | MRSVOEX | RCOEX |
| 83 | | IIOAOEX/ |
| 84 | FCLD/ | MRLD/ |
| 85 | MOPND/ | REPEATB |
| 86 | INVOP | COND/ |
| 87 | ACWRITE/ | ACBWE/ |
| 88 | SMWEX/ | STKA0 |
| 89 | STKA1 | STKA2 |
| 90 | STKA3 | ENREP/ |
| 91 | BYTSWP B | SCSOX |
| 92 | SCSIX | ALUMDX |
| 93 | ALUS3X | ALUS2X/ |
| 94 | ALUS1X | ALUS0X |
| 95 | D3B | GND |
| 96 | F0B | F1B |
| 97 | ACADR0 | ACADR1 |
| 98 | ACADR2 | S0B |
| 99 | S1 | S2 |

Table XI is a glossary of the front plane signal names for the Universal I/O State Machine. This glossary shows the signal name, the number of the front plane connector involved, when the signal is a Fan-in or a Fan-out signal and, in addition, a functional description of the signal involved.

**0 116 098**

TABLE XI
Glossary of UIOSM frontplane signal names

| Signal name | Connector number | Fan-in/fan-out* | Description |
|---|---|---|---|
| 1. MADDR15—MADDR00 | 1 | FD 75/40 | Memory address bus |
| 2. IRQ/ | 1 | FI 1.25/3.16 (includes 1100 ohm pull-up res) | Line that is used to interrupt the UIOSM. |
| 3. PROMENB/ | 1 | FI 2.25/1.5 | Expanded memory in the application dependent logic can drive this line which when high will allow the enabling of the program PROM on the UIOSM. |
| 4. IOBUS15—IOBUS00 | 1 | FO 373/38.75 FI 2.5/1.5 | BUS lines for GET data to UIOSM (or RAM) or PUT data to application dependent logic. |
| 5. IOBUSPAR | 1 | FO 25/12.5 | Odd parity line for IOBUS15—IOBUS00. |
| 6. REGADDR4—REGADDR0 | 1 | FO 75/40 | External register address lines for GET's and PUT's |
| 7. BUSREQ/ | 1 | FI 5.75/9.65 | When this line is held low the UIOSM address outputs are tri-stated. When this line returns high the Program Generator will be output on the address bus. |
| 8. FLAG3/—FLAG1 | 1 | FI 1.25/3.16 | Condition test lines used by program stack operators. |

*The Fan-in (FI) or Fan-out (FO) is expressed as H/L where H is the high level FI or FO and L is the low level FI or FO. FI or FO is from the point of view of the UIOSM, and is expressed in standard TTL unit loads (40 μA high; and−1.6 mA low).

21

**0 116 098**

TABLE XI (contd.)
Glossary of UIOSM frontplane signal names

| Signal name | Connector number | Fan-in/fan-out* | Description |
|---|---|---|---|
| 9. HALTREP/ | 1 | FI 1.25/4.25 | Line which will stop a repeated instruction |
| 10. MRR15 | 1 | FI 1.25/0.25 | Line that is used by mapping logic to control bit 15 of the memory reference register (MRR15). This line should be tied low if mapping is not used. |
| 11. MEMOUT15— MEMOUT00 | 2 | FI 1.25/.25 | Memory output bus. |
| 12. MEMOUTPA | 2 | FI 1.25/.25 | Memory output bus odd parity line. |
| 13. OCREG107— OCREG100 OCREG207— OCREG200 | 2 | FO 160/12.5 | Output control register output data lines. |
| 14. OCREG1CK OCREG2CK | 2 | FI 1.25/0.25 | Clock line for output control registers. |
| 15. ACKI/ | 1 | FO 75/40 | Line that acknowledges that an interrupt request is being accepted by the UIOSM. When this signal is low, the application logic should place an interrupt call address on the I/O bus. |
| 16. PUTSTB3/— PUTSTB1/ | 2 | FO 75/40 | Lines that indicate PUT data is on the I/O bus. |
| 17. RAMRD/ | 2 | FO 23.25/11.25 | This line goes high at least 30 ns before RAMWE/ goes low. It may be used by application logic for generating a synchronized version of RAMWE/. |
| 18. WAIT/ | 2 | FI 1.25/4 (includes 1100 ohm pull-up res) | Line which causes the UIOSM to wait one or more clock periods. |
| 19. CLR/ | 2 | FI 1.25/3.16 (includes 1100 ohm pull-up res) | Line which causes the UIOSM to clear. |

22

**0 116 098**

TABLE XI (contd.)
Glossary of UIOSM frontplane signal names

| Signal name | Connector number | Fan-in/fan-out* | Description |
|---|---|---|---|
| 20. RAMWE/ | 2 | FO 25/12.5 | Write enable for RAM. |
| 21. GETENB/ | 2 | FO 23/11.25 | Line which indicates that GET data should drive into the I/O bus. |
| 22. PARERR/ | 2 | FO 25/12.5 | Line that indicates a parity error was detected on the previous memory fetch. |
| 23. CLKEN | 2 | FI 1.25/4 (includes 1100 ohm pull-up res) | Line that enables the UIOSM clock when high. |
| 24. GETSTB | 1 | FO 25/12.5 | Line used with GETENB/ for application timing. |
| 25. BUSEN/A BUSEN/B | 3 | FI 5/5 | When these lines go high, the I/O bus is disabled. |
| 26. IFETCH/A IFETCH/B | 3 | FO 75/40 | When low, these signals indicate that an instruction OP code is being fetched. |
| 27. BKG/FRGA BKG/FRGB | 3 | FO 75/40 | When these signals are high, the UIOSM is processing an interrupt (running in background mode). |
| 28. MROEB/ | 4 | FO 75/40 | When low, this signal indicates that MRR is being output on the address bus. |
| 29. SC1B, SC2B, SC4, SC8 | 4 | FO 75/40 FO 20/11.25 | Outputs of the State counter. |
| 30. MNTENB/ | 4 | FI 10/5.5 | When low, this line will tri-state the outputs of the five instruction decode PROMS. |
| 31. SMOE/ | 4 | FO 20423/8.83 | When low, this signal indicates that the stack memory is being output on the I/O bus. |

23

TABLE XI (contd.)
Glossary of UIOSM frontplane signal names

| Signal name | Connector number | Fan-in/fan-out* | Description |
|---|---|---|---|
| 32. BSAOEX/ BSBOEX | 4 | FO 47.75/9.81 | When low, these signals indicate that byte A or B of the byte swap logic will be output on the I/O bus during the next clock. |
| 33. SHAOEX/ SHBOEX | 4 | FO 47.75/9.81 | When high, these signals indicate that byte A or B of the shift logic will be output on the I/O bus during the next clock. |
| 34. MRSVOEX/ | 4 | FO 49/9.81 | When low, this signal indicates that the MRR save register will be output on the I/O bus during the next clock. |
| 35. RCOEX/ | 4 | FO 47.75/9.81 | When low, this signal indicates that the repeat counter will be output on the I/O bus during the next clock. |
| 36. IIOAOEX/ | 4 | FO 47.75/9.81 | When low, this signal indicates that the most significant (A) byte of the I/O bus will be driven to all zeros during the next clock. |
| 37. PCLD/ | 4 | FO 48/8.98 | When low, this signal indicates that the program counter will be loaded from the I/O bus at the next clock. |
| 38. STKOVF/ | 4 | FO 25/12.5 | This signal goes low during a CALL when this stack address is at maximum (15), or during a RETURN when the stack address is zero. |
| 39. MRLD/ | 4 | FO 3.75/4.75 | When low, this signal indicates that MRR will be loaded from the I/O bus at the next clock. |
| 40. REPEATB | 4 | FO 75/40 | When high, this signal indicates that a repeat operation is in progress. |

# 0 116 098

TABLE XI (contd.)
Glossary of UIOSM frontplane signal names

| Signal name | Connector number | Fan-in/fan-out* | Description |
|---|---|---|---|
| 41. MOPND/ | 4 | FO 48/8.98 | When low, this signal indicates that the memory data being read will be used during the next clock. This signal will be high for unused read data and during memory write cycles. |
| 42. COND/ | 4 | FO 173.75/12.47 | When low during a BRANCH, CALL or RETURN, this signal indicates that the selected condition is true. |
| 43. INVOP | 4 | FO 206.75/9.47 | When high this signal indicates that an invalid condition was detected in the state machine. Conditions that will cause this term to go high are: 1. IRETURN with D3=0. 2. Repeat made with CALL, BRANCH, RETURN, ICALL or IRETURN operators. 3. GET or PUT with the state count greater than 1. 4. CALL, BRANCH, RETURN, ICALL and RETURN with the state count greater than 2. 5. ALU operators other than LOWD, STD, EI, OI, ADDC, SUBC and RSTX with the state count greater than 1. 6. Repeat made with the state count not equal to 1. 7. STWD or LDWD with D=0000. |
| 44. ACBWE/ | 4 | FO 23.74/12.18 | When low, this signal indicates the "B" (low order) byte of the selected accumulator register is enabled for writing. |

TABLE XI (contd.)
Glossary of UIOSM frontplane signal names

| Signal name | Connector number | Fan-in/fan-out* | Description |
|---|---|---|---|
| 45. ACWRITE/ | 4 | FO 7.49/8.43 | When low, this signal indicates that the selected accumulator is being writren. The "A" (high order) byte is always written and the "B" (low order) byte is controlled by the ACBWE/ signal. |
| 46. STKA0 STKA1 STKA2 STKA3 | 4 | FO 22.48/11 | Program stack address. |
| 47. SMWEX/ | 4 | FO 47.75/9.81 | When low, this signal indicates that the program stack will be written from the I/O bus on the next clock. |
| 48. ENBREP/ | 4 | FO 24/12 | When low, this signal indicates a PUT to the repeat counter is taking place and a repeat operation will start on the next clock. |
| 49. BYTSWPB | 4 | FO 75/40 | When high, this signal indicates that the byte-swap bit is set. |
| 50. SCS0X SCS1X | 4 | FO 47.75/9.81 | These signals indicate that the shift function will be on the next clock: |

| SCS0X | SCS1X | function |
|---|---|---|
| 0 | 0 | shift rt. |
| 1 | 0 | no shift |
| 0 | 1 | shift lft. |
| 1 | 1 | double shift lft. |

**0 116 098**

TABLE XI (contd.)
Glossary of UIOSM frontplane signal names

| Signal name | Connector number | Fan-in/fan-out* | Description |
|---|---|---|---|
| 51. ALUMDX | 4 | FO 47.75/9.81 | These signals indicate |
| ALUS3X/ | 4 | FO 47.75/9.81 | what the ALU function |
| ALUS2X/ | 4 | FO 47.75/9.81 | will be on the next |
| ALUS1X | 4 | FO 46.5/9.66 | clock: |
| ALUX0X | 4 | FO 46.5/9.66 | |

| MD | S3/ | S2/ | S1 | S0 | Func. |
|---|---|---|---|---|---|
| 1 | 0 | 0 | 1 | 1 | F=A |
| 1 | 0 | 1 | 1 | 0 | F=B |
| 0 | 0 | 1 | 0 | 1 | F=A+B |
| 0 | 0 | 0 | 1 | 1 | F=A−1 |
| 0 | 1 | 1 | 0 | 0 | F=A+1 |
| 0 | 1 | 0 | 1 | 0 | F=A−B |
| 1 | 0 | 1 | 1 | 1 | F=A & B |
| 1 | 1 | 0 | 0 | 1 | F=B/ |
| 1 | 1 | 1 | 0 | 0 | F=A/ |
| 1 | 0 | 0 | 0 | 0 | F=1's |
| 1 | 0 | 0 | 1 | 0 | F=A or B |
| 1 | 1 | 0 | 1 | 0 | F=A or B |
| 1 | 1 | 1 | 1 | 1 | F=0's |

(F=ALU output,
A=Accumulator,
B=Memory)

| Signal name | Connector number | Fan-in/fan-out* | Description |
|---|---|---|---|
| 52. D3B | 4 | FO 75/40 | These signals are copies |
| F1B | 4 | FO 75/40 | of instruction register |
| F0B | 4 | FO 75/40 | bits. |
| S2 | 4 | FO 159.75/11.47 | (F=Function, |
| S1 | 4 | FO 159.75/11.47 | D=Destination, |
| S0B | 4 | FO 75/40 | S=Source) |
| 53. ACADR2 | 4 | FO 17.48/9.36 | Accumulator address. |
| ACADR1 | 4 | FO 17.48/9.36 | When the state machine |
| ACADR0 | 4 | FO 17.48/9.36 | internal clock is high, |

the source accumulator
address is present on
these signals. When
the clock is low the
destination accumulator
address is present.

27

TABLE XI (contd.)
Glossary of UIOSM frontplane signal names

| Signal name | Connector number | Fan-in/fan-out* | Description |
|---|---|---|---|
| 54. IOBRCE/ | 4 | FO | When low, this signal causes the I/O bus to go from transmit (output) to receive (input) mode. The signal may be driven from the foreplane with an open-collector driver to control the I/O bus for maintenance purposes. |
| 55. MRR/.A<br>MRR/.B | 3 | FO 75/40 | When low, these signals indicate that MRR is output on the address bus. |

Note:
Only one each of the following groups of signals will be active on the foreplane at a time. Group A or B will be selected by jumper options for use in a multiple-processor environment. This allows memory/DMA logic to recognize requests from two distinct state machines:

1. BUSEN/A
BUSEN/B

2. IFETCH/A
IFETCH/B

3. BKG/FRGA
BKG/FRGB

4. MRR/.A
MRR/.B

The following Tables XII and XII-A through G show the operators of the UIO State Machine.

TABLE XII

UIO state machines operators
Notes:
(a) The "M" mit is not listed under each operator since it always has the same meaning as earlier defined and actually appears in the instruction to which it applies.
(b) Additionally, the "C" bit is not listed under each operator, since it always has the same meaning as earlier defined.
(c) The following flags are conditioned by ALU operators:
1. The *carry flag* is only updated during ADD, SUBT, INCR, DECR, ADDC, AND SUBC operators.
2. The *ALU=0* flag is set if the output of the ALU is all zero's.
3. The *MSB flag* is set if bit 15 of the I/O bus is zero.
4. The *LSB flag* is set if bit 0 of the I/O bus is zero.
(d) X=don't care.

**0 116 098**

TABLE XII-A
Arithmetic OP's

1. ADD — PLACES THE RESULTS OF A BINARY ADD OF ACCUMULATOR A(S) AND MEMORY INTO ACCUMULATOR A(D), AND/OR INTO THE MEMORY REFERENCE REGISTER (MRR), OR MERELY UPDATES THE FLAG REGISTER (NULL). IF THE ADD OVERFLOWS, THE CARRY FLAG WILL GO TRUE.

```
F=10
V=00000
D=1[A(D)]      ACCUMULATOR A(D)
   0001        Null
S=[A(S)]       ACCUMULATOR A(S)
```

2. DECR — PLACES THE RESULTS OF MEMORY MINUS 1 INTO ACCUMULATOR A(D), AND/OR INTO THE MEMORY REFERENCE REGISTER (MRR), OR MERELY UPDATES THE FLAG REGISTER (NULL). IF THE DECR UNDERFLOWS, THE CARRY FLAG WILL GO FALSE.

```
F=10
V=00001
D=1[A(D)]      ACCUMULATOR A(D)
   0001        NULL
S=XXX
```

3. INCR — PLACES THE RESULTS OF MEMORY PLUS 1 INTO ACCUMULATOR A(D), AND/OR INTO THE MEMORY REFERENCE REGISTER (MRR), OR MERELY UPDATES THE FLAG REGISTER (NULL). IF THE INCR OVERFLOWS, THE CARRY FLAG WILL GO TRUE.

```
F=10
V=00010
D=1[A(D)]      ACCUMULATOR A(D)
   0001        NULL
S=XXX
```

4. ROTL — PLACES THE RESULTS OF A LEFT ROTATE BY ONE BIT (MSB INTO LSB) ON ACCUMULATOR A(S) INTO ACCUMULATOR A(D) OR MERELY UPDATES THE FLAG REGISTER (NULL). THE CARRY FLAG IS NOT AFFECTED.

```
F=10
V=00011
D=1[A(D)]      ACCUMULATOR A(D)
   0001        NULL
S=[A(S)]       ACCUMULATOR A(S)
```

5. ROTR — PLACES THE RESULTS OF A RIGHT ROTATE BY ONE BIT (LSB INTO MSB) ON ACCUMULATOR A(S) INTO ACCUMULATOR A(D) OR MERELY UPDATES THE FLAG REGISTER (NULL). THE CARRY FLAG IS NOT AFFECTED.

```
F=10
V=00100
D=1[A(D)]      ACCUMULATOR A(D)
   0001        NULL
S=[A(S)]       ACCUMULATOR A(S)
```

6. SHFL — PLACES THE RESULTS OF A LEFT SHIFT BY ONE BIT (ZERO SHIFTED INTO LSB) ON ACCUMULATOR A(S) INTO ACCUMULATOR A(D) OR MERELY UPDATES THE FLAG (NULL). THE CARRY FLAG IS NOT AFFECTED.

```
F=10
V=00101
D=1[A(D)]      ACCUMULATOR A(D)
   0001        NULL
S=[A(S)]       ACCUMULATOR A(S)
```

29

TABLE XII-A (contd.)
Arithmetic OP's

7. SHFM —PLACES THE RESULTS OF A LEFT SHIFT BY ONE BIT (ZERO SHIFTED INTO LSB) ON MEMORY INTO ACCUMULATOR A(D), AND/OR INTO THE MEMORY REFERENCE REGISTER (MRR), OR MERELY UPDATES THE FLAG REGISTER (NULL). THE CARRY FLAG IS NOT AFFECTED.

```
F=10
V=00110
D=1[A(D)]      ACCUMULATOR A(D)
   0001        NULL
S=XXX
```

8. SHFR —PLACES THE RESULTS OF A RIGHT SHIFT BY ONE BIT (ZERO SHIFTED INTO MSB) ON ACCUMULATOR A(S) INTO ACCUMULATOR A(D) OR RAM, OR MERELY UPDATES THE FLAG REGISTER (NULL). THE CARRY FLAG IS NOT AFFECTED.

```
F=10
V=00111
D=1[A(D)]      ACCUMULATOR A(D)
   0001        NULL
S=[A(S)]       ACCUMULATOR A(S)
```

9. SUBT —PLACES THE RESULTS OF A BINARY SUBTRACT ON MEMORY AND ACCUMULATOR A(S) (MEMORY MINUS A(S)) INTO ACCUMULATOR A(D), AND/OR INTO THE MEMORY REFERENCE REGISTER (MRR), OR MERELY UPDATES THE FLAG REGISTER (NULL). IF THE SUBT UNDERFLOWS, THE CARRY FLAG WILL GO FALSE.

```
F=10
V=01000
D=1[A(D)]      ACCUMULATOR A(D)
   0001        NULL
S=[A(S)]       ACCUMULATOR A(S)
```

10. DRTL —PLACES THE RESULTS OF A LEFT ROTATE BY 2 BITS ON ACCUMULATOR A(S) INTO ACCUMULATOR A(D) OR RAM, OR MERELY UPDATES THE FLAG REGISTER (NULL). THE CARRY FLAG IS NOT AFFECTED.

```
V=10111
D=1[A(D)]      ACCUMULATOR A(D)
   0001        NULL
S=[A(S)]       ACCUMULATOR A(S)
```

TABLE XII-B
Logical OP's

1. AND — PLACES THE RESULTS OF A LOGICAL AND ON ACCUMULATOR A(S) AND MEMORY (A+M) INTO ACCUMULATOR A(D), AND/OR INTO THE MEMORY REFERENCE REGISTER (MRR), OR MERELY UPDATES THE FLAG REGISTER (NULL). THE CARRY FLAG IS NOT AFFECTED.

```
F=10
V=01001
D=1[A(D)]      ACCUMULATOR A(D)
   0001        NULL
S=[A(S)]       ACCUMULATOR A(S)
```

2. CMA — PLACES THE COMPLEMENT OF ACCUMULATOR A(S) INTO ACCUMULATOR A(D) AND/OR INTO THE MEMORY REFERENCE REGISTER (MRR), OR MERELY UPDATES THE FLAG REGISTER (NULL). THE CARRY FLAG IS NOT AFFECTED.

```
F=10
V=01010
D=1[A(D)]      ACCUMULATOR A(D)
   0001        NULL
S=[A(S)]       ACCUMULATOR A(S)
```

3. CMM — PLACES THE COMPLEMENT OF MEMORY INTO ACCUMULATOR A(D), AND/OR INTO THE MEMORY REFERENCE REGISTER (MRR), OR MERELY UPDATES THE FLAG REGISTER (NULL). THE CARRY FLAG IS NOT AFFECTED.

```
F=10
V=01011
D=1[A(D)]      ACCUMULATOR A(D)
   0001        NULL
S=XXX
```

4. ONES — SETS ACCUMULATOR A(D) AND/OR THE MEMORY REFERENCE REGISTER (MRR) TO ALL ONES OR MERELY UPDATES THE FLAG REGISTER (NULL). THE CARRY FLAG IS NOT AFFECTED.

```
F=10
V=01100
D=1[A(D)]      ACCUMULATOR A(D)
   0001        NULL
S=XXX
```

5. OR — PLACES THE RESULTS OF A LOGICAL OR ON ACCUMULATOR A(S) AND MEMORY (A+M) INTO ACCUMULATOR A(D), AND/OR INTO THE MEMORY REFERENCE REGISTER (MRR), OR MERELY UPDATES THE FLAG REGISTER (NULL). THE CARRY FLAG IS NOT AFFECTED.

```
F=10
V=01101
D=1[A(D)]      ACCUMULATOR A(D)
   0001        NULL
S=[A(S)]       ACCUMULATOR A(S)
```

6. XOR — PLACES THE RESULTS OF A LOGICAL EXCLUSIVE OR ON ACCUMULATOR A(S) AND MEMORY (A EXOR M) INTO ACCUMULATOR A(D), AND/OR INTO THE MEMORY REFERENCE REGISTER (MRR), OR MERELY UPDATES THE FLAG REGISTER (NULL). THE CARRY FLAG IS NOT AFFECTED.

```
F=10
V=01110
D=1[A(D)]      ACCUMULATOR A(D)
   0001        NULL
S=[A(S)]       ACCUMULATOR A(S)
```

TABLE XII-B (contd.)
Logical OP's

7. ZERO — SETS ACCUMULATOR A(D) AND/OR THE MEMORY REFERENCE REGISTER (MRR) TO ALL ZEROS OR MERELY UPDATES THE FLAG REGISTER (NULL). THE CARRY FLAG IS NOT AFFECTED.

```
F=10
V=01111
D=1[A(D)]        ACCUMULATOR A(D)
  0001           NULL
S=XXX
```

8. ADDC — PLACES THE RESULTS OF A BINARY ADD OF ACCUMULATOR A(S), MEMORY, AND THE CARRY FLAG INTO ACCUMULATOR A(D), AND/OR INTO THE MEMORY REFERENCE REGISTER (MRR) OR MERELY UPDATES THE FLAG REGISTER (NULL). IF THE ADD OVERFLOWS, THE CARRY FLAG WILL GO TRUE.

```
F=10
V=11100
D=1[A(D)]        ACCUMULATOR A(D)
  0001           NULL
S=[A(S)]         ACCUMULATOR A(S)
```

9. SUBC — PLACES THE RESULT OF A BINARY SUBTRACT ON MEMORY AND ACCUMULATOR A(S), LESS THE CARRY FLAG, (MEMORY MINUS A(S) MINUS CARRY) INTO ACCUMULATOR A(D), AND/OR INTO THE MEMORY REFERENCE REGISTER (MRR), OR MERELY UPDATES THE FLAG REGISTER (NULL). IF THE SUBT UNDERFLOWS, THE CARRY FLAG WILL GO FALSE.

```
F=10
V=11101
D=1[A(D)]        ACCUMULATOR A(D)
  0001           NULL
S=[A(S)]         ACCUMULATOR A(S)
```

## 0 116 098

TABLE XII-C
Program stack OP's

Note:

The following instructions do not affect condition flags.

1. BRANCH — IF THE CONDITION TEST IS TRUE, THE PROGRAM COUNTER (PC) WILL BE REPLACED WITH ACCUMULATOR A(S) OR WITH A LITERAL STORED IN MEMORY.

| | | |
|---|---|---|
| F=11 | | |
| V=10000 | | BRANCH UNCONDITIONALLY (OR NOT) |
| 10001 | | BRANCH ON ALU=0 (OR NOT) |
| 10010 | | BRANCH ON ALU MSB=0 (OR NOT) |
| 10011 | | BRANCH ON ALU CARRY=1 (OR NOT) |
| 10100 | | BRANCH ON ALU LSB=0 (OR NOT) |
| 10101 | | BRANCH ON EXTERNAL FLAG 1=1 (OR NOT) |
| 10110 | | BRANCH ON EXTERNAL FLAG 2=1 (OR NOT) |
| 10111 | | BRANCH ON EXTERNAL FLAG 3=1 (OR NOT) |
| D=SXXF | S=0 | BRANCH ADDRESS IN MEMORY |
| | S=1 | BRANCH ADDRESS IN ACCUMULATOR A(S) |
| | F=1 | EXECUTE ON CONDITION TEST TRUE |
| | F=0 | EXECUTE ON CONDITION TEST NOT TRUE |
| S=XXX | | IF BRANCH ADDRESS IS IN MEMORY |
| [A(S)] | | IF BRANCH ADDRESS IS IN ACCUMULATOR A(S) |

2. CALL — IF THE CONDITION TEST IS TRUE, THE PROGRAM COUNTER (PC) WILL BE REPLACED WITH ACCUMULATOR A(S) OR WITH A LITERAL STORED IN MEMORY, AND THE OLD PROGRAM COUNT (+1 IF M=1, +2 IF M=0) WILL BE PUSHED INTO THE PROGRAM STACK. UP TO 16 CALLS CAN BE MADE FROM THE INITIAL PROGRAM START POINT.

| | | |
|---|---|---|
| F=11 | | |
| V=01000 | | CALL UNCONDITIONALLY (OR NOT) |
| 01001 | | CALL ON ALU=0 (OR NOT) |
| 01010 | | CALL ON ALU MSB=0 (OR NOT) |
| 01011 | | CALL ON ALU CARRY=1 (OR NOT) |
| 01100 | | CALL ON ALU LSB=0 (OR NOT) |
| 01101 | | CALL ON EXTERNAL FLAG 1=1 (OR NOT) |
| 01110 | | CALL ON EXTERNAL FLAG 2=1 (OR NOT) |
| 01111 | | CALL ON EXTERNAL FLAG 3=1 (OR NOT) |
| D=SXXF | S=0 | CALL ADDRESS IN MEMORY |
| | S=1 | CALL ADDRESS IN ACCUMULATOR A(S) |
| | F=1 | EXECUTE ON CONDITION TEST TRUE |
| | F=0 | EXECUTE ON CONDITION TEST NOT TRUE |
| S=XXX | | IF CALL ADDRESS IS IN MEMORY |
| [A(S)] | | IF CALL ADDRESS IS IN ACCUMULATOR A(S) |

3. RETURN — IF THE CONDITION TEST IS TRUE, THE PROGRAM COUNTER WILL BE REPLACED WITH THE LAST VALUE STORED IN THE PROGRAM STACK

| | |
|---|---|
| F=11 | |
| V=11000 | RETURN UNCONDITIONALLY (OR NOT) |
| 11001 | RETURN ON ALU=0 (OR NOT) |
| 11010 | RETURN ON ALU MSB=0 (OR NOT) |
| 11011 | RETURN ON ALU CARRY=1 (OR NOT) |
| 11100 | RETURN ON ALU LSB=0 (OR NOT) |
| 11101 | RETURN ON EXTERNAL FLAG 1=1 (OR NOT) |
| 11110 | RETURN ON EXTERNAL FLAG 2=1 (OR NOT) |
| 11111 | RETURN ON EXTERNAL FLAG 3=1 (OR NOT) |
| D=1XX1 | EXECUTE ON CONDITION TEST TRUE |
| 1XX0 | EXECUTE ON CONDITION TEST NOT TRUE |
| S=XX0 | |

TABLE XII-C (contd.)
Program stack OP's

4. ICALL — THIS INSTRUCTION IS FORCED BY HARDWARE TO ENTER INTERRUPT MODE. THE BACKGROUND FLAGS AND ACCUMULATOR ARE ACTIVE AFTER THIS INSTRUCTION IS EXECUTED. MRR IS SAVED IN THE MRR SAVE REGISTER AND THEN PC (PC IS INCREMENTED) IS STORED IN THE PROGRAM STACK. THE ADDRESS PROVIDED BY THE APPLICATION LOGIC ON THE I/O BUS IS LOADED IN PC.

F=11
V=11111
D=1111
S=111
M=1
C=1

5. IRETURN — EXITS INTERRUPT MODE, RESTORES MRR, AND REPLACES THE PROGRAM COUNTER WITH THE LAST VALUE STORED IN THE PROGRAM STACK. THE FOREGROUND FLAGS AND ACCUMULATORS ARE ACTIVE AFTER THIS INSTRUCTION IS EXECUTED.

F=11
V=00XXX
D=1XXX
S=XXX

6. BCALL — THIS INSTRUCTION ALLOWS ENTRY INTO BACKGROUND MODE FOR MAINTENANCE PURPOSES. BACKGROUND MODE IS ENTERED AND PC+1 IS STORED ON THE STACK. THE INSTRUCTION AT PC+1 IS THEN EXECUTED.

F=11
V=11111
D=01111
S=XX1

**0 116 098**

TABLE XII-D
Load, store, and move OP's

Note:

The following instructions make reference to a *memory operand word* or *source accumulator word* as (AB) where the left character (A) is the high order byte and the right character (B) is the low order byte. These instructions will condition all flags except the *carry flag.*

1. RDW — (READ WORD) PLACES THE CONTENTS OF MEMORY (AB) INTO ACCUMULATOR A(D) AS AB, AND/OR INTO THE MEMORY REFERENCE REGISTER (MRR) AS AB, OR MERELY UPDATES THE FLAG REGISTER (NULL).

```
F=10
V=10000
D=1[A(D)]      ACCUMULATOR A(D)
    0001       NULL
S=XXX
```

2. RDB — (READ BYTE) PLACES THE CONTENTS OF MEMORY (AB) INTO ACCUMULATOR A(D) AS OA IF THE BYTE SWAP BIT IS 0 OR AS OB IF THE BYTE SWAP BIT IS 1.

```
F=10
V=10001
D=1[A(D)]      ACCUMULATOR A(D)
    0001       NULL
S=XXX
```

3. RDBW — (READ BEFORE WRITE BYTE) PLACES THE CONTENTS OF MEMORY (AB) INTO ACCUMULATOR A(D) AS AX IF THE BYTE SWAP BIT IS 1 OR AS BX IF THE BYTE SWAP BIT IS 0. THE X BYTE INDICATES THAT THE DESTINATION ACCUMULATOR A(D) IS UNCHANGED FOR THAT BYTE.

```
F=10
V=10010
D=1[A(D)]      ACCUMULATOR A(D)
    0001       NULL
S=XXX
```

4. RBWR — (READ BEFORE WRITE BYTE REVERSED) PLACES THE CONTENTS OF MEMORY (AB) INTO ACCUMULATOR A(D) AS AX IF THE BYTE SWAP BIT IS 0 OR AS BX IF THE BYTE SWAP BIT IS 1. THE X BYTE INDICATES THAT THE DESTINATION ACCUMULATOR A(D) IS UNCHANGED FOR THAT BYTE.

```
F=10
V=10110
D=1[A(D)]      ACCUMULATOR A(D)
    0001       NULL
S=XXX
```

5. SWAC — (SWAP ACCUMULATOR) PLACES THE CONTENTS OF ACCUMULATOR A(S) (AB) INTO ACCUMULATOR A(D) AS BA.

```
F=10
V=10011
D=1[A(D)]      ACCUMULATOR A(D)
    0001       NULL
S=[A(S)]       ACCUMULATOR A(S)
M=1
```

TABLE XII-D (contd.)
Load, store, and move OP's

6. WRTW — (WRITE WORD) PLACES THE CONTENTS OF ACCUMULATOR A(S) (AB) INTO ACCUMULATOR A(D) AS AB, AND/OR INTO THE MEMORY REFERENCE REGISTER (MRR) AS AB, OR INTO RAM MEMORY AS AB, OR MERELY UPDATES THE FLAG REGISTER (NULL).

```
F=10
V=10100
D=1[A(D)]       ACCUMULATOR A(D)
   0000         RAM MEMORY
   0001         NULL
S=[A(S)]        ACCUMULATOR A(S)
M=1
```

7. WRTB — (WRITE BYTE) PLACES THE CONTENTS OF ACCUMULATOR A(S) (AB) INTO ACCUMULATOR A(D) OR RAM MEMORY AS AB IF THE BYTE SWAP BIT IS 1 OR BA IF THE BYTE SWAP BIT IS 0.

```
F=10
. V=10101        ACCUMULATOR D(S)
D=1[A(D)]       RAM
   0001         NULL
S=[A(S)]        ACCUMULATOR A(S)
M=1
```

8. LDWD — (LOAD WORD DIRECT) PLACES THE CONTENTS OF MEMORY INTO MRR. PLACES THE CONTENTS OF MEMORY POINTED TO BY THE NEW CONTENTS OF MRR INTO ACCUMULATOR A(D) (AB), AND/OR INTO MRR, OR MERELY UPDATES THE FLAG REGISTER (NULL).

```
F=10
V=11000
D=1[A(D)]       ACCUMULATOR A(D)
S=XXX
```

9. STWD — (STORE WORD DIRECT) PLACES THE CONTENTS OF MEMORY INTO MRR. PLACES THE CONTENTS OF ACCUMULATOR A(S) (AB) INTO RAM MEMORY AT THE ADDRESS POINTED AT BY THE NEW MRR VALUE, AND/OR INTO MRR.

```
F=10
V=11001
D=0001
S=[A(S)]        ACCUMULATOR A(S)
```

10. RSTK — (READ STACK) PLACES THE CONTENTS OF THE TOP WORD OF THE STACK (RETURN ADDRESS) INTO ACCUMULATOR A(D).

```
F=10
V=11110
D=1[A(D)]       ACCUMULATOR A(D)
   0001         NULL
S=XXX
```

TABLE XII-E
GET and PUT OP's

Note:
The following instructions do not affect condition flags.

1. GET — PLACES CONTENTS OF EXTERNAL REGISTER R(N) OR THE REPEAT COUNTER INTO ACCUMULATOR A(D), OR INTO RAM MEMORY. THE "C" BIT MUST BE 1 IN THE INSTRUCTION. THE "M" BIT MUST BE 1 IN THIS INSTRUCTION.

```
F=00
V=[R(N)]        EXTERNAL REGISTER R(N)
D=1[A(D)]       ACCUMULATOR A(D)
   0000         RAM MEMORY
   0001         NULL
S=XX0           APPLICATION REGISTER
  XX1           REPEAT COUNTER
```

2. PUT — PLACES CONTENTS OF ACCUMULATOR A(S) OR MEMORY INTO EXTERNAL REGISTER R(N). THREE SEPARATE "STROBE" LINES CAN ALSO BE GENERATED FOR USE BY THE APPLICATION DEPENDENT LOGIC. THE CONTENTS OF ACCUMULATOR A(S) OR MEMORY CAN ALSO BE COPIED TO THE MEMORY REFERENCE REGISTER (MRR).

```
F=01
V=[R(N)]          EXTERNAL REGISTER R(N)
D=SFF S=0         PUT FROM MEMORY
      S=1         PUT FROM ACCUMULATOR A(S)
   FFF=000        GENERATE STROBE #1
   FFF=001        GENERATE STROBE #2
   FFF=010        GENERATE STROBE #3
   FFF=011        LOAD AND ENABLE REPETITION COUNTER
S=XXX             IF PUT FROM MEMORY
  [A(S)]          IF PUT FROM ACCUMULATOR A(S)
```

TABLE XII-F
Miscellaneous OP's

Note:
The following instructions do affect condition flags.

1. EI — RESETS THE INTERRUPT MASK BIT.

```
F=10
V=11010
D=0001          NULL
S=XXX
```

2. DI — SETS THE INTERRUPT MASK BIT.

```
F=10
V=11011
D=0001          NULL
S=XXX
```

# 0 116 098

TABLE XII-G

ALU OP code summary table (F=10)

Note:

This code summary table for the Function Variant Field V is listed in reference to:

Arithmetic Op's (Table XII-A)
Logical OP's (Table XII-B)
Load, Store, Move OP's (Table XII-D)

| V V V V 3 2 1 0 | V4=0 | V4=1 |
|---|---|---|
| 0 0 0 0 | ADD | RDW |
| 0 0 0 1 | DECR | RDB |
| 0 0 1 0 | INCR | RDBW |
| 0 0 1 1 | ROTL | SWAC |
| 0 1 0 0 | ROTR | WRTW |
| 0 1 0 1 | SHFL | WRTB |
| 0 1 1 0 | SFHM | RBWR |
| 0 1 1 1 | SHFR | DRTL |
| 1 0 0 0 | SUBT | LDWD |
| 1 0 0 1 | AND | STWD |
| 1 0 1 0 | CMA | EI |
| 1 0 1 1 | CMM | DI |
| 1 1 0 0 | ONES | ADDC |
| 1 1 0 1 | OR | SUBC |
| 1 1 1 0 | XOR | RSTK |
| 1 1 1 1 | ZERO | Reserved |

Operational factors:

The external memory storage RAM 90 is used to hold programs which have to do with the transferring of data between the external memory 90, the microprocessor unit and the application dependent registers 60 where data can be transferred to selected peripheral terminals or received from selected peripheral terminals. While the application dependent register 60 can buffer and generally holds several words, it is also necessary that large batches of character transfers, such as a 1,000 character batch, will be temporarily stored or buffered in the external RAM memory 90. This is necessary since data transfers to and from the peripheral devices are very slow in comparison with the fast speed of operation of the microprocessor and the host computer.

It will be noted that the main host system 100 is connected by means of a message level interface bus 105 which, through a host adapter, not shown, connects to the application dependent registers 60. Further, as seen in Fig. 1 individual peripherals can be·shown as items $109_a$ and $109_b$ which are connected to the external registers. Each of these peripherals also has an adapter unit $109_c$ which controls the peripheral terminal unit and can also be instructed by the microprocessor system through instruction words passed through application dependent registers 60.

As seen in Figs. 2A and 2B the general control and coordination is handled by the instruction decoder-controller 23 which has connections to all of the units in the system; however, the main interconnections have been shown on the drawings which indicate control lines to the major units involved.

Since the basic function of the overall system is to control and effectuate the transfer of data between selected peripherals and the main host system, it is helpful to consult the data provided in the previously cited patents which were incorporated by reference. The system operation is initiated when the main host

38

system 100 of Fig. 1 conveys an I/O descriptor command word on the message level interface lines 105, this command being placed into a selected application dependent register 60. As mentioned in the previously cited patent references, the main host system also provides a "descriptor link" word signal which identifies a task to be performed so that when that task is either completed or incompleted, the peripheral-controller can formulate a Result Descriptor word which can be conveyed to the main host system to inform it of the condition status as either completion or non-completion of the task to be performed and also to identify the task so that the result word data will be channeled to the proper memory location in the main host system where data concerning a given task has been located.

The microprocessor system is placed into operation by means of the "clear" signal shown in Fig. 2A at line 11, at which time it starts operations so that the first address of the program counter is used to address the program memory 50 in order to initiate the fetching and execution of instruction words.

The receipt of the I/O command descriptor word into the application dependent registers will cause the Interrupt line signal (on lines of bus 11) to be sent to instruction decoder-controller 23 whereby the microprocessor will fetch, analyze and execute operations as a result of the I/O command descriptor.

With the I/O descriptor in the application dependent register and with the Interrupt signal activated, the microprocessor will use a GET operator to get this command data from the application dependent register 60 and put it into a selected accumulator register 30 where it can then be read, analyzed and interpreted by the arithmetic logic unit (ALU 32) and its associated data manipulation circuitry so that the required operators and data will be sent again to the application dependent register 60, or the external memory 90 and such that the control logic 66 will permit the transfer of data to occur.

Assuming a Write operation (transfer from host computer system to peripheral), the I/O command descriptor from the main host system will have the address of a selected peripheral in its instructions. The address of this peripheral will also be taken on into a GET operation by the microprocessor and translated into an instruction which can then be put (PUT operation) into the peripheral (via an adapter) by using control logic 66 and selected application dependent registers 60 in order to select the desired peripheral device 109. As seen in Fig. 2 each of the peripheral devices will have an adapter $109_c$ which is associated with the peripheral device in order to control its operation and data transfers. Then the microprocessor can send appropriate instruction commands to the adapter unit of the selected peripheral such that the input line to the peripheral can be enabled and instructions can be provided by the microprocessor, for example, to take incoming data from the main host system 100 (which may be temporarily stored in the application dependent register 60 or temporarily stored in the external memory 90) and then transfer data to the selected peripheral terminal device.

For example, if the selected peripheral terminal device is a "card reader", then this peripheral unit is oriented to handle only one byte at a time so that it is then necessary for the microprocessor instructions to select only one byte at a time and to transfer the data one byte at a time from its storage in external memory into the peripheral terminal unit. On the other hand, if data, for example, is being transferred to a disk-type peripheral, which generally handles a two byte word (16 bits) then the data can be transferred in terms of "words" (symbolically designated AB) directly to the peripheral adapter and thence the peripheral disk.

Thus, it is seen that in certain situations it is necessary to select only one byte, at a time, out of two byte word in order that one byte, at a time, can be transferred out into the peripheral which can only accept one byte at a time. In this case, if there is an accessed word AB composed of two bytes, it is then necessary for the microprocessor to select out one byte at a time for transfer to the peripheral. This is done generally by using the "low order" byte as the byte to be selected for transfer. Thus, in the word AB, the byte B would be selected for transfer to the peripheral, after which the word-byte positions AB would be byte-swapped into the word positions BA, and then the "low order" byte A could then be transferred into the peripheral terminal unit.

The I/O command descriptor may eventually wind up in a selected one of the accumulator registers 30 or in a selected external register 60 or in external memory 90. In any case it must be available from the host computer 100 so that the microprocessor can access it, analyze it and make the appropriate signals as to what further instructions must be generated.

The program counter 41 holds addresses which are used to select instruction data from the program memory 50. This program counter is reset to zero with the initiation of the "power on" signal and the clear signal.

With the initiation of the fetching of instruction words from the program memory and with the receipt of an I/O command descriptor, the command descriptor data will be transferred to an internal register of the microprocessor system, such as the accumulator register 30 where it can then be inspected and analyzed by the data manipulation circuitry (ALU 32) and the associated shift logic and byte swap circuitry 33, 34. Thus, the meaning and intent of the descriptor command can be translated into instructions for the selection of a peripheral device, through its adapter, and for a subsequent transfer of data to or from the particular peripheral terminal device.

For example, the PUT operator is generated by the microprocessor and is applied to the application dependent logic module $60_L$. An address (of a peripheral adapter and a peripheral terminal unit) will then be provided and the application dependent logic module will operate on this address to select the appropriate adapter and peripheral unit for data to be transferred. The software of the microprocessor system generates the PUT commands to the peripheral adapter.

When the microprocessor system generates a PUT operator to the application dependent logic module $60_L$, then this enables the system to operate such that the host computer will send data on message level interface 105 to selected application dependent registers 60 where it can then be transferred into and stored in the external memory 90. As the microprocessor system provides a multiple series of repeated GET operators, then each word of data (or each byte of data if the peripheral can only accept bytes) will be transferred from the external register 60 to the selected peripheral terminal.

Since the microprocessor operates much faster than the peripheral terminal, then what would generally be done is that if there is a multiple word transfer of data, is that the words would be stored in the external memory 90 and then fetched and transferred out to a selected peripheral at the slower speed with which the peripheral terminal device can accept the data. In this respect the external memory 90 acts as a storage buffer which permits the microprocessor to operate at its high speed while data can reside in the external memory 90 and then be transferred at a slower speed to the selected peripheral.

Data will be sent from external memory 90 to the peripheral terminal by the use of a PUT operator which is used to control the peripheral adapter and terminal unit. That is to say, the PUT operator will command a word to be transferred from external memory 90 into a selected external register 60 and thence the peripheral. The PUT operator always deals with full "words" (AB). For byte-oriented usage, the microprocessor generates intervening instructions to isolate a "byte" from a memory word into a selected accumulator from which a PUT operation is then executed.

The use of the memory reference register 40 is prominent here in that this register provides a source of addresses for the selection of operands and for the selection of programs which reside in the external memory 90.

In the situation of a Read operation where it is desired that a selected peripheral terminal unit will "send" data to the main memory of the host system, again the I/O descriptor command will be placed by the host computer into the application dependent register 60 which will then interrupt the microprocessor and ask it to "GET" the I/O command and to analyze and execute it. Since this is a Read operation from a selected peripheral device, the microprocessor will then generate the addresses and the transfer commands so that a particularly selected peripheral and its control adapter will be selected and the data from that particularly selected peripheral will be transferred to application dependent register 60 and thence stored temporarily in external memory 90. Then a series of GET operators will cause the transfer of the words stored in external memory 90 to the external register 60 and thence through the message level interface 105 over to the host system 100. Transfers to the host system will be done on a full word (two byte) basis, AB, in repetitive cycles since the host system can accept the complete 16 bit word AB.

In summary, a multiple number of GET operators will cause the transfer of data from the peripheral terminal unit into the external memory 90 which acts as a buffer. Then a multiple number of PUT operators will be used to transfer this data from external memory 90 to the application register 60 and thence through the message level interface to the main host system 100. The adapters $109_c$ of Fig. 1 which are supplied for each of the peripheral devices are useful in accepting commands and for controlling operations of the particular peripheral. For example, at certain times it might be necessary to rewind the tape mechanism of a tape peripheral terminal unit or to eject or slew the paper on a printing paper device type terminal unit, or to select a certain address sector in the disk terminal unit.

In regard to the "C" bit previously discussed under the title "C field", this feature permits certain economies in the number of instructions.

Because there is only one memory reference register (MRR), loops of code which deal with multiple address ranges, such as a loop to move 'n' words from address 's' to address 'd', involve alternately loading MRR with source ('s') and destination ('d') addresses. Such loops also involve incrementing the 's' and 'd' addresses for each iteration. Without the copy (C) bit, such a loop looks like:

```
<get # of words in accumulator A₀>
<get source address 's' in A₁>
<get destination address 'd' in A₂)>
```

```
L:   WRTW    MRR, A₁       % MRR←Source address

     RDW     A₃, M         % A₃←Next source word from memory

     ADD     A₁, A₁, 1     % Increment source address for next time

     WRTW    MRR, A₂       % MRR←Destination address

     WRTW    M, A₃         % Store source word into memory from A₃

     ADD     A₂, A₂, 1     % Increment destination address for next time

     ADD     A₀, A₀, −1    % Decrement word counter A₀

     BR      L, NZERO      % Go back to point L if not done (A₀≠0)
```

Total for loop=8 instructions per word moved

Using the copy bit it is possible to combine the incrementing of the address accumulator with the setting of MRR in one step. To do so, adopting the trick of starting with 's−1' and 'd−1' in the accumulators, this is done only once:

<get # of words in accumulator A₀>
<get source address 's' in A₁>
<get destination address 'd' in A₂>

```
not    ⎧ ADD   A₁, A₁, −1     % A₁ now contains s−1
inside ⎨
loop   ⎩ ADD   A₂, A₂, −1     % A₂ now contains d−1

L:   ADD     A₁, A₁, 1, C    % increment source address and copy to MRR

     RDW     A₃, M           % A₃←next source word from memory

     ADD     A₂, A₂, 1, C    % increment destination addresses and copy to MRR

     WRTW    M, A₃           % write source word into memory from A₃

     ADD     A₀, A₀, −1      % decrement word counter A₀

     BR      L, NZERO        % go back to point L if not done (A₀≠0)
```

Total for loop=6 instructions per word moved

Thus, it is possible to save $((8—6)*n)−2$ instructions by using move 'n' words, or $2n−2$ instructions. For 100 words, this is 198; at current speeds that equals about 50 microseconds saved for 100 words moved.

Byte oriented read/write operators:

As was previously discussed, the UIO-SM has been implemented with several operators to simplify the processing of byte-oriented data even though the memory is organized in words which are two bytes wide. These particular operators work in conjunction with the memory reference register 40 of Fig. 2 which addresses external RAM data memory 90.

The byte-oriented read/write operators use the "byte-swap" feature of the UIO-SM such that the "desired" byte is always read from external memory (90) into the "low order" byte of a selected register of the destination accumulator A(D) even though the desired byte might have been in the "high" order byte of the memory location in 90. The desired byte, after being placed into the destination accumulator A(D), can then be processed. After the low order byte is processed, the high order byte of the accumulator A(D) must be updated with the other byte from the current data memory location, and then the two bytes are written into memory 90 as one word, and each byte will go into the proper position. This would be needed, for example, when a card reader peripheral is supplying only one byte of a word for each transfer operation.

In the case of byte-oriented operators, the decision whether or not to "byte-swap" is determined by the low order bit of the memory reference register 40 which, in essence, is a byte-address. The following Table XIII is an example which illustrates the use of these operators in handling sequential byte data which is stored in memory 90.

The next following Table XIV shows a sequence of instructions and the resultant signals in the memory reference register 40, the accumulator register 30 and the data memory 90. Thus, the sequence shown in Table XIV starts with loading the memory reference register 40; reading the byte (RDB); translation; read

**0 116 098**

before write byte (RDBW); write byte (WRTB); incrementing the memory reference register (MRR 40); again read byte (RDB); again translate; again read before write byte (RDBW); write byte (WRTB); incrementing memory reference register 40; read byte (RDB); translate; read before write byte (RDBW); write byte (WRTB); and so on.

TABLE XIII

Handling sequential byte data

| Data memory address* | Memory data (MSB$_y$—LSB$_y$***) | |
|---|---|---|
| 0 | A | B |
| 1 | C | D |
| 2 | E | F |

Sequential data to be processed=ABCDEF

*Actually, the first UIOSM instruction must be in address zero if there is no physical separation between program memory and data memory.

**MSB=Most significant byte, LSB=Least significant byte

Note:

The symbols ABCD here refer to successive bytes of memory data to be processed in sequence.

TABLE XIV

Exemplary sequence of instructions

| Instruction | MRR | MRRLSB* | Accumulator data (MSB$_y$—LSB$_y$***) | | Memory data (MSB$_y$—LSB$_y$***) | |
|---|---|---|---|---|---|---|
| Load MRR with starting addr of seq.:data | 0 | 0 | | | | |
| RDB | | | 0 | A | | |
| process (translate) | | | X | A' | | |
| RDBW | | | B | A' | | |
| WRTB | | | | | A' | B |
| increment MRR | 0 | 1 | | | | |
| RDB | | | 0 | B | | |
| process (translate) | | | X | B' | | |
| RDBW | | | A' | B' | | |
| WRTB | | | | | A' | B' |
| increment MRR | 1 | 0 | | | | |
| RDB | | | 0 | C | | |
| process (translate) | | | X | C' | | |
| RDBW | | | D | C' | | |
| WRTB | | | | | C' | D |

etc.

*MRRLSB=MRR least significant bit. This bit does not address memory but is used by the UIOSM to determined whether or not to byte swap on byte oriented op's.

**MSB$_y$=Most significant byte, LSB$_y$=Least significant byte

42

A further "byte-oriented" operator has been implemented into the UIO-SM and is illustrated in the following Table XV. This operator aids in the formation of a "two-byte" data word where the two bytes are sequentially located in data memory 90. But unless several OP's are used, it is not known whether or not the two desired bytes are in a single memory location or whether they straddle two memory locations.

The upper portion of Table XV shows the arrangement of data in a first Memory 1 and a second Memory 2 corresponding to true and false signals of the data memory address. Then the lower part of Table XV shows an exemplary sequence for the sequential instructions with reference to data in the memory reference register 40 and in the accumulator 30.

TABLE XV

| Data memory address | Memory data 1 ($MSB_y$—$LSB_y$**) | | Memory data 2 ($MSB_y$—$LSB_y$**) | |
|---|---|---|---|---|
| 0 | B | C | A | B |
| 1 | D | E | C | D |

Desired sequential data=CD

| Instruction | MRR | MRRLSB* | Accumulator data ($MSB_y$—$LSB_y$**) | |
|---|---|---|---|---|
| Memory data 1 Case: load MRR with data ending address | 1 | 0 | | |
| RDB | | | 0 | D |
| decrement MRR | 0 | 1 | | |
| RBWR | | | C | D |
| Memory data 2 case: load MRR with data ending address | 1 | 1 | | |
| RDB | | | 0 | D |
| decrement MRR | 1 | 0 | | |
| RBWR | | | C | D |

*MRRLSB=MRR least significant bit. This bit does not address memory but is used by the UIOSM to determine whether or not to byte swap on byte oriented OP's.
**$MSB_y$=Most significant byte. $LSB_y$=least significant byte.

Linear micro-sequencing

Fig. 2C is a schematic block drawing of the Instruction Decoder 23 with its linear micro-sequencing circuit. A State Counter $23_s$ is initiated into a Fetch operation upon receipt of a Clear signal to its input. The State Counter $23_s$ feeds address bits to the PROM $23_p$ which contains a set of internal micro-instructions. The PROM $23_p$ provides one output line designated Count Enable which is used to sequence the State Counter $23_s$.

One set of instruction signal outputs, selected from PROM $23_p$, are a set of control terms which are conveyed to a pipeline register $23_r$ which provides control signals to the units of the microprocessor and the application dependent logic $60_L$. The pipeline register $23_r$ is used (a) to synchronize the output control term signals and also (b) to delay (by one clock) an output control term so that the signal from PROM $23_p$ will be adequately stabilized. Another set of control signal terms are provided directly from the output lines of PROM $23_p$.

As seen by the dotted lines above PROM $23_p$, an alternate plug-compatible PROM $23_x$ can replace $23_p$ and be utilized by up to two extra address lines from State Counter $23_s$. Each line (1 bit) will permit the addressing of an alternate or added set of instructions from PROM $23_x$ (in addition to using the original 2 bit lines).

In Fig. 2C the Instruction Register 22 provides input instructions to PROM $23_p$. An input of 15 bits (instruction fields) is fed to Instruction Register 22 from either Program Memory 50 or external memory 90 depending on which memory has been selected as a source of data.

One register of Instruction Register 22 is dedicated to receipt of the one bit of data called the "M" bit which is placed in each instruction word (from Program Memory 50). As discussed earlier, this field (M) is the one which selects either the Program Counter 41 or the Memory Reference Register 40 as the source of addresses to be next used for the selection of data.

In Fig. 2C the Condition Select Multiplexer $23_m$ has inputs from internal flag registers 35, 36, and from external flags $23_e$ in the Application Dependent Logic $60_L$. The output of Condition Select Multiplexer $23_m$ is used to provide an input to PROM $23_p$ of the linear micro-sequencer. Operationally, it should be noted that, at the same time that an instruction is being decoded, there is simultaneously a Fetch of the operand, since the M bit, when set, will initiate selection of an address from Memory Reference Register 40 (or when M not set, selects Program Counter) to access data from a location in external memory 90 (or Program Memory 50).

Fig. 2C-1 is a schematic illustration indicating modes of the State Counter $23_s$. At state number 0 (upon activation of the Clear signal) a Fetch operation is initiated. Thence the "1" state is achieved where the instructions may start execution of an instruction.

After completion of the "1" state, the sequencer may return to "0" for a Fetch and proceed to the "2" state. Here an operation step can occur.

After completion of this cycle, the State Counter returns to "0" for another Fetch operation, or else sequence to state "3" which permits an additional set of operations as shown in Fig. 2C-1.

After this, the State Counter goes to "0" (or "4") for Fetch.

The remaining portions of Fig. 2C-1 showing the states "4", "5", "6" and "7" refer to the situation in Fig. 2C where an alternate larger instruction PROM $23_x$ has been used to replace $23_p$ with the extra two address lines of 1 bit each for addressing the micro-instruction PROM. Here, an alternate instruction set can be accessed and sequenced, similar to the sequencing of the PROM $23_p$ using the states 0 through 3. The State Counter $23_s$ can thus be used to address and select instructions from either PROM $23_p$ or from a larger PROM $23_x$.

Referring again to Fig. 2C, the Instruction Register 22 is seen to provide a 5 bit address line to select an external register 60. There is further provided a 3 bit "source address" line and a 3 bit "destination address" line to Multiplexer $30_x$ (which is shown again in Fig. 2D). Referring to Fig. 2D, the accumulator registers 30 are seen clocked by a 8 megahertz clock, and also have a Write Enable (WE) input line coming from decoder-controller 23.

Multiplexer $30_x$ (Fig. 2D) receives input addresses (from instruction register 22) for the source of data and for the destination of data. The SELECT line to MUX $30_x$ enables the source address to be read on the first half of the clock as seen in Fig. 2E at "Read", and enables the destination address to be written on the second half of the clock at "Write". Thus, the source location of data to be processed, and the destination location, where the data is to be placed, are all accomplished in one clock (125 nanoseconds).

Referring to Fig. 2D, a latch $30_t$ is provided to the accumulator registers 30 to hold and convey data to ALU 32. The other data input to ALU 32 is from Memory Operand Register 31 which receives data and instructions along instruction bus 15 (from Program Memory 50), and/or memory data bus 12 (from external memory).

The I/O bus 10 provides a path for processed data to be fed back to accumulator registers 30 or to the external memory 90 or to the external registers 60 (of application dependent logic unit $60_L$).

Referring to Fig. 2F, there is seen a schematic drawing showing the intercooperation of the Repetition Counter 42 and Repeat Mode Flip-Flop $23_f$ and decoder-controller 23.

When a LOAD/PUT OP occurs which loads a number N into the Repetition Counter 42, this operation also sets the Repeat Mode Flip-Flop $23_f$ which then continues to signal the decoder-controller 23 to continue iterative operations of the next instruction OP. On each iteration, the Repetition Counter is decremented. When the count therein reads "0", then a reset signal is conveyed to the Repeat Mode Flip-Flop $23_f$ to turn it off which will signal the decoder-controller 23 that the iteration is finished (or to be halted), at which time the microprocessor will then select the next instruction from Program Memory 50 (via program counter 41).

In Fig. 2F, there will be seen another line for resetting (shutting off) the Repeat Mode Flip-Flop $23_f$. This is done by using a HALT/REP signal from Control Logic 66 in the Application Dependent Logic Unit $60_L$. This could occur because Control Logic 66 has sensed an early ending in the data transfer operation.

The linear micro-sequencer enables functions to be partitioned among the various PROMs so that each PROM will handle certain functions. There is no need for a stack memory or a next address register in the micro-sequencing circuitry. The micro-sequencer lowers the need for multiple IC's and permits expansion of PROM usage with no increase in hardware.

The microprocessor system permits simplicity and time-economy with which instructions can be fetched and executed, and data fetched and manipulated for data transfer purposes can be accomplished by what may be called (1) instruction pipelining and (2) operand pipelining.

Certain overlapping operations are made to occur which provide for an exceptionally short time for instruction and operand fetch and for execution of instructions.

Thus, while the processor is fetching an instruction in one clock, on the next clock, it is storing the result data in an I/O (peripheral) device by means of the I/O bus 10, or it may be storing the result data in the external memory 90, for example. At the same time that the result data is being stored, another fetch cycle occurs which is a fetch cycle using a memory address on the address bus 16 which will then provide an output of memory data on the memory data bus 12.

Note that the external memory read path 12 is set separate from the memory write path 10 and the system can store the result data in a peripheral I/O device while at the same time reading instructions from memory.

There are basically two different lines or separate paths, one for instructions and one for operands. For example, the instruction bus 15 feeds instructions to the instruction register 22. The memory operand register 31 also can receive operands from the memory data bus 12. Thus, on one clock the instruction bus can feed instructions to the instruction register (and then to instruction decoder-controller) while on the next clock the operand can be fed to the memory operand register 31 to facilitate the execution of the instructions.

Since the address of the I/O device (peripheral) is contained in the instruction word, the system can immediately store data in the I/O device. One level of the instruction pipelining includes (a) storing result data into the internal register files (as the accumulators 30 or the external registers 60) and (b) storage of results into an I/O port adapter which connects to peripheral devices.

The operand pipeline uses the M bit. Thus, in one clock while the processor is storing result data by using the I/O bus and using an address that has already been fetched, then at the same time an instruction fetch cycle can be occurring from program memory 15, on the next clock a decoding operation takes place simultaneously with the fetching of the operand after which on the next clock the storage of result data takes place in an addressed location.

The M bit is used as part of the operand pipeline in order to determine which source of addressing will be used—that is whether the memory reference register 40 will be used (data pointer) or whether the program counter 41 will be used (instruction pointer). Please refer to page 76 of specification on Byte oriented Read/Write operators. Note that the arithmetic logic unit 32 has the one input from the memory operand register 31 while the other input is from the accumulator registers 30.

While a preferred embodiment of the disclosed invention has been described and explained, it is, of course, understood that modifications and changes may be made without departing from the concept of the invention as defined by the following claims.

## Claims

1. A peripheral-controller for use in a data transfer network comprising a main host computer (100) and a plurality of peripheral terminals (109), the peripheral-controller being made of slide-in cards mounted in a base module wherein said base module includes a distribution control card circuit to connect and/or disconnect said host computer to said peripheral-controller and a maintenance card circuit for providing clock signals and test signals to said peripheral-controller, wherein said peripheral-controller comprises a universal processor system (1) and an application-dependent module (60L), the universal processor system functioning, after initiation by instruction from said main host computer, to generate and execute data transfer commands for data transfer operations between said host computer and selected peripheral terminals, wherein said universal processor system (1) includes an internal program memory (50) for storing instructions, memory address logic means (40, 41) for selectively accessing data from said internal program memory or from an external memory; instruction-execution logic means (22, 23, 31) for executing program instructions, said means having control lines to said internal memory (50), to said external memory, to said memory address logic means and to data manipulation logic means (32, 33, 34); wherein said application-dependent logic module (60L) inter-cooperates with said processor system and includes an external memory (90) for holding data-transfer programs for peripheral terminals and for temporarily storing data undergoing transfer; external register means (60) for temporarily holding instructions and data undergoing transfer, said external register means having bus connections to said main host computer and to said plurality of peripheral terminals; and control logic means (66) including address decoder means (66ad) for recognizing address signals directed to slow external memory or to slow peripheral terminals, for controlling said external memory, said external register means, and said universal processor system and further comprising bus means including an I/O bus (10) for carrying instructions and data from said universal processor (1) to said external memory (90), said external register (60), and said control logic means (66); a memory address bus (16) for addressing said external memory and said address decoder; a memory data output bus (12) for carrying instructions and data from said external memory (90) to said universal processor system (1); an instruction output bus (15) for carrying instructions from the internal program memory (50) to the instruction-execution logic means (22, 23, 31), and control lines for communication and control between said application-dependent logic module (60L) and said universal processor system (1), wherein said instruction-execution logic means (22, 23, 31) includes an instruction register (22) receiving instructions from said internal program memory (50) or said external memory (90), and providing an output to an instruction decoder-controller (23) which also receives signals from said application-dependent logic module (60L), and functions to control said universal processor system (1) and said application-dependent logic module (60L) to execute data transfer instructions initiated by said host computer (100), wherein said memory address logic means (40, 41) includes a program counter (41) for addressing said internal program memory (50); and a memory reference register (40) for addressing said

45

external memory (90), and a bit field (M) to signal said instruction-execution logic means (22, 23, 31) to select either said program counter (41) or said memory reference register (40) as a source of addresses for access from said internal (50) or said external memory (90), characterised in that said universal processor includes clock circuitry triggered by said maintenance card clock signals to time the rate of processor operations and a WAIT signal input line from an application-dependent logic module for temporarily disabling said clock circuitry to permit data transfer operations at a slower rate for slow memories and slow peripherals; and said address decoder means (66ad) has means to generate a WAIT signal to disable said processor clock circuitry for a set number of clock cycles to maintain a slower rate of data transfer than the rate of said processor system; in that said instruction decoder-controller (23) includes linear sequencing means for selecting microinstructions for execution in a pre-determined sequence, said sequencing means including a microinstruction memory (23p) receiving input instructions from said instruction register (22), and providing output control signals to said universal processor system (1) and a state counter (23s) for sequentially addressing said microinstruction memory (23p) to generate output control signals for execution of instructions and another control signal for sequencing said state counter; and in that said instruction register (22) provides output signals to selectively address a specific external register in said external register means (60), and output signals to address a specific register of said accumulator register means (30) as a source of data and/or as a destination of data, the arrangement of the I/O bus (10), the memory address bus (16), the memory data output bus (12) and the instruction output bus (15) being such as to provide separate paths for instructions and for operands, so that while the processor stores data using the I/O bus during one clock cycle, instructions may be simultaneously fetched from the internal program memory (50) via the instruction bus (15), and while the instruction is being decoded in the next clock cycle, an operand may be fed to the memory operand register (31) via the data output bus (12).

2. A peripheral-controller according to Claim 1, characterised in that said internal program memory (50) provides instructions to set the duration of said WAIT signal when external slow memory or slow external peripheral terminals are addressed.

3. A peripheral-controller according to Claim 2, characterised in that said control logic means (66) includes circuit means, responsive to instructions from said universal processor system, to determine the number of decoder-controller clock cycles to be disabled by said WAIT signal.

4. A peripheral-controller according to Claim 3, characterised in that said instruction-decoder-controller (23) includes means to halt execution of data transfers to/from said external memory/external register means during activation of said WAIT signal from said control logic means (66).

**Patentansprüche**

1. Periphere Steuerung für ein Datenübertragungsnetzwerk, das einen Host-Hauptrechner (100) und eine Mehrzahl von peripheren Terminals (109) enthält; welche periphere Steuerung in der Form von einschiebbaren Schaltungskarten aufgebaut ist, die in einem Basismodul angeordnet sind, wobei das Basismodul eine Verteiler-Steuerkarte zum Verbinden und/oder Trennen des Host-Rechners mit/von der peripheren Steuerung sowie eine Wartungskarte zur Bereitstellung von Taktsignalen und Prüfsignalen an die periphere Steuerung enthält; welche periphere Steuerung ein Universalprozessorsystem (1) und ein anwendungsabhängiges Modul (60L) enthält, wobei das Universalprozessorsystem nach Inbetriebsetzung durch einen Befehl vom Host-Hauptrechner Datenübertragungsbefehle für Datenübertragungsvorgänge zwischen dem Host-Rechner und ausgewählten peripheren Terminals erzeugt und ausführt; welches Universalprozessorsystem (1) einen internen Programmspeicher (50) zum Speichern von Befehlen, eine Speicheradressierungs-Logikanordnung (40, 41) für einen selektiven Zugriff zu Daten des internen Programmspeichers oder eines externen Speichers und eine Befehlsausführungs-Logikanordnung (22, 23, 31) zur Ausführung von Programmbefehlen enthält, die Steuerleitungen zu dem internen Speicher (50), dem externen Speicher, zu der Speicheradressierungs-Logikanordnung und zu einer Datenbearbeitungs-Logikanordnung (32, 33, 34) aufweist; welches anwendungsanhängige Modul (60L) mit dem Prozessorsystem zusammenarbeitet und einen externen Speicher (90) zum Halten von Datenübertragungsprogrammen für periphere Terminals und zum kurzzeitigen Speichern von übertragenen Daten, eine externe Registeranordnung (60) zum temporären Halten von übertragenen Befehlen und Daten—wobei die externe Registeranordnung Bus-Verbindungen zu dem Host-Hauptrechner und zu der Mehrzahl von peripheren Terminals aufweist—und eine Steuerlogikanordnung (66) aufweist, die eine Adressdekoderanordnung (66 ad) zum Erkennen von für langsame externe Speicher und langsame periphere Terminals bestimmten Addressignalen zum Steuern des externen Speichers, der externen Registeranordnung und des Universalprozessorsystems enthält; und weiter enthaltend eine Bus-Anordnung mit einem E/A-Bus (10) zum Transport von Befehlen und Daten von dem Universalprozessorsystem (1) zu dem externen Speicher (90), dem externen Register (60) und der Steuerlogikanordnung (66), mit einem Speicheradressbus (16) zum Adressieren des externen Speichers und desd Adressdekoders, mit einem Speicherdatenausgangsbus (12) zu dem Universalprozessorsystem (1), mit einem Befehlsausgangsbus (15) zum Transport von Befehlen von dem internen Programmspeicher (50) zu der Befehlausführungs-Logikanordnung (22, 23, 31) und mit Steuerleitungen für die Kommunikation und Steuerung zwischen dem anwendungsabhängigen Modul (60L) und dem Universalprozessorsystem (1); welche Befehlsausführungs-Logikanordnung (22, 23, 31) ein Befehlsregister (22) enthält, das Befehle von dem internen Programmspeicher (50) oder dem externen Speicher (90) empfängt und ein Ausgangssignal an eine Befehlsdekodersteuerung (23) abgibt, die auch Signale von dem anwendungsabhängigen Modul (60L) empfängt und das Universalprozessorsystem (1) und das anwendungsabhängige Modul (60L) derart steuert, daß diese durch den Host-Rechner (100) ausgelöste Datenübertragungsbefehle ausführen; und welche Speicheradress-Logikanordnung (40, 41) einen Programmzähler (41) zum Adressieren des internen Programmspeichers (50), ein Speicherreferenzregister (40) zum Adressieren des externen Speichers (90) und ein Bitfeld (M) enthält, um der Befehlsausführungs-Logikanordnung (22, 23, 31) zu signalisieren, daß diese entweder den Programmzähler (41) oder das Speicherreferenzregister (40) als Adressenquelle für den Zugriff zu dem internen Speicher (50) oder dem externen Speicher (90) auswählt; dadurch gekennzeichnet, daß der Universalprozessor Taktschaltungen, die durch die Taktsignale der Wartungskarte getriggert werden, um eine Zeitgabe für die Geschwindigkeit der Prozessoroperationen durchzuführen, sowie eine Warte-Signal-Eingangsleitung von einem anwendungsabhängigen Logikmodul zum temporären Sperren der Taktschaltungen enthält, um Datenübertragungsvorgänge mit niedrigerer Geschwindigkeit für langsame Speicher und langsame Peripheriegeräte zu erlauben; daß die Adressdekoderanordnung (66 ad) Mittel zum Erzeugen eines Warte-Signals enthält, durch das die Taktschaltungen des Prozessors für eine eingestellte Anzahl von Taktimpulsen gesperrt werden, um eine niedrigere Datenübertragungsgeschwindigkeit als die des Prozessorsystems zu erzielen; daß die Befehlsdekodersteuerung (23) eine lineare Folgeschaltung zum Auswählen von auszuführenden Mikrobefehlen in vorbestimmter Folge enthält, die einen Mikrobefehlsspeicher (23p), der Eingangsbefehle von dem Befehlsregister (22) empfängt, aufweist und Ausgangssteuersignale an das Universalprozessorsystem (1) und an einen Zustandszähler (23s) zum sequentiellen Adressieren des Mikrobefehlsspeichers (23p) liefert, um Ausgangssteuersignale für die Befehlsausführung und ein anderes Steuersignal zum Fortschalten des Zustandszählers zur Verfügung zu stellen; daß das Befehlsregister (22) Ausgangssignale liefert, um ein spezifisches externes Register in der externen Registeranordnung (60) selektiv zu adressieren, und Ausgangssignale liefert, um ein spezifisches Register der Akkumulator-Registeranordnung (30) als eine Quelle von Daten und/oder als Datenziel zu adressieren; daß die Anordnung des E/A-Bus (10), des Speicheradressbus (16), des Speicherdatenausgangsbus (12) und des befehlsausgangsbus (15) derart ist, daß getrennte Pfade für Befehle und für Operanden bestehen, so daß während der Speicherung von Daten durch den Prozessor unter Benutzung des E/A-Bus in einem Taktzyklus gleichzeitig Befehle von dem internen Programmspeicher (50) über den Befehlsbus (15) abgefordert werden können, und daß während der Dekodierung des Befehls in dem nächsten Taktzyklus ein Operand an das Speicheroperandenregister (31) über den Datenausgangsbus (12) übertragen werden kann.

2. Periphere Steuerung nach Anspruch 1, dadurch gekennzeichnet, daß der interne Programmspeicher (50) Befehle liefert, um die Dauer des Warte-Signals einzustellen, wenn langsame externe Speicher oder langsame externe periphere Terminals angesteuert werden.

3. Periphere Steuerung nach Anspruch 2, dadurch gekennzeichnet, daß die Steuerlogikanordnung (66) Mittel enthält, die abhängig von Befehlen aus dem Universalprozessorsystem die Anzahl der Dekodersteuerungs-Taktzyklen bestimmt, die durch das Warte-Signal gesperrt werden sollen.

4. Periphere Steuerung nach Anspruch 3, dadurch gekennzeichnet, daß die Befehlsdekodersteuerung (23) Mittel zum Anhalten der Ausführung von Datenübertragungen and die/von der externen Speicher- und externen Registeranordnung während der Aktivierung des Warte-Signals der Steuerlogikanordnung (66) enthält.

## Revendications

1. Contrôleur périphérique destiné à un réseau d'échange de données composé d'un ordinateur-hôte principal (100) et d'un ensemble de terminaux périphériques (109), le contrôleur périphérique se composant de cartes enfichables montées dans un module de base qui comporte un circuit de carte de commande de distribution pour brancher et/ou couper l'ordinateur-hôte du contrôleur périphérique et un circuit de carte de maintenance fournissant les signaux d'horloge et les signaux de test au contrôleur périphérique, le contrôleur périphérique se composant d'un système de processeur universel (1) et un module d'application (60L), le système de processeur universel fonctionnant après le déclenchement par l'instruction de l'ordinateur-hôte principal de manière à générer et à exécuter des ordres d'échange de données pour des opérations d'échange de données entre l'ordinateur-hôte et les terminaux périphériques choisis, le système de processeur universel (1) comprenant une mémoire de programme interne (50) pour enregistrer des instructions, une logique d'adresses de mémoire (40, 41) pour accéder sélectivement aux données de la mémoire de programme interne ou une mémoire externe; une logique d'exécution d'instructions (22, 23, 31) pour exécuter des instructions de programme, le moyen comportant des lignes de commande pour la mémoire interne (50), pour la mémoire externe, pour la logique d'adresses de mémoire et pour la logique de traitement des données (32, 33, 34), le module logique d'application (60L) coopérant avec le système de processeur et comprenant une mémoire externe (90) pour conserver les programmes d'échange de données pour les terminaux périphériques et pour enregistrer provisoirement les données en cours de transfert; un registre externe (60) pour conserver provisoirement les instructions et les données en cours de transfert, le registre externe ayant des bus de liaison pour l'ordinateur-hôte principal et l'ensemble des terminaux périphériques; et la logique de commande (66) comprenant un

**0 116 098**

décodeur d'adresses (66ad) pour reconnaître les signaux d'adresses destinés à la mémoire externe lente ou à des terminaux périphériques lents, pour commander la mémoire externe, le registre externe et le système de processeur universel ainsi qu'un bus comprenant un bus E/S 10 pour transférer les instructions et les données entre le processeur universel (1) et la mémoire externe (90), le registre externe (60) et la logique de commande (66) et un bus d'adresses de mémoire (16) pour adresser la mémoire externe et le décodeur d'adresses; un bus de sortie de données de mémoire (12) pour transférer les instructions et les données de la mémoire externe (90) vers le système de processeur universel (1); un bus de sortie d'instructions (15) pour transférer les instructions de la mémoire de programme interne (50) vers la logique d'exécution des instructions (22, 23, 31) et des lignes de commande pour l'échange des communications et des commandes entre le module logique d'application (60L) et le système de processeur universel (1), la logique d'exécution d'instructions (22, 23, 31) comportant un registre d'instructions (22) recevant les instructions de la mémoire de programme interne (50) ou de la mémoire externe (90) et fournissant une sortie à un contrôleur-décodeur d'instructions (23) qui reçoit également les signaux du module logique d'application (60L) et commandant le système de processeur universel (1) et le module logique d'application (60L) pour exécuter les instructions d'échange de données déclenchées par l'ordinateur-hôte (100), la logique d'adresses de mémoire (40, 41) comportant un compteur de programme (41) pour adresser la mémoire de programme interne (50) et un registre de référence de mémoire (40) pour adresser la mémoire externe (90) ainsi qu'un champ de bit (M) pour signaler à la logique d'exécution d'instructions (22, 23, 31) qu'elle doit choisir soit le compteur de programme (41), soit le registre de référence de mémoire (40) comme source des adresses d'accès de la mémoire interne (50) ou de la mémoire externe (90) contrôleur caractérisé en ce que le processeur universel comporte un circuit d'horloge déclenché par les signaux d'horloge de la carte de maintenance pour synchroniser la vitesse des opérations du processeur et une ligne d'entrée de signal WAIT venant du module logique d'application pour interdire provisoirement le circuit d'horloge et permettre d'effectuer les opérations d'échange de données à une vitesse plus faible pour les mémoires lentes et les périphériques lents; le décodeur d'adresses (66ad) ayant un moyen pour générer un signal WAIT pour interdire le circuit d'horloge du processeur pendant un certain nombre de cycles d'horloge et maintenir une vitesse plus lente d'échange de données que la vitesse du système de processeur; le contrôleur-décodeur d'instructions (23) comportant un séquenceur linéaire pour sélectionner des micro-instructions en vue de leur exécution suivant une séquence prédéterminée, le séquenceur comportant une mémoire de micro-instructions (23p) recevant des instructions d'entrée du registre d'instructions (22) et fournissant des signaux de commande de sortie au système de processeur universel (1) ainsi qu'un compteur d'état (23s) pour adresser séquentiellement la mémoire de microinstructions (23p) et générer des signaux de commande de sortie pour l'exécution des instructions ainsi qu'un autre signal de commande pour séquencer le compteur d'état; et en ce que le registre d'instructions (22) fournit des signaux de sortie pour adresser sélectivement un registre externe déterminé du registre externe (60) et des signaux de sortie pour adresser un registre déteminer des registres accumulateurs (30) comme source de données et/ou comme destination de données, l'organisation du bus E/S 10, du bus d'adresses de mémoire (16), du bus de sortie de données de mémoire (12) et du bus de sortie d'instructions (15) réalisant des chemins distincts pour les instructions et les opérandes, de sorte que pendant le processeur enregistre des données en utilisant le bus E/S au cours d'un cycle d'horloge, les instructions peuvent être saisies simultanément dans la mémoire de programme interne (50) par le bus d'instructions (15) et pendant le décodage des instructions au cours du cycle d'horloge suivant, un opérande peut être saisie dans le registre d'opérandes de mémoire (31) par l'intermédiaire du bus de sortie de données (12).

2. Contrôleur-périphérique selon la revendication 1, caractérisé en ce que la mémoire de programme interne (50) fournit des instructions pour mettre à l'état la durée du signal WAIT lorsqu'on adresse une mémoire lente externe ou des terminaux périphériques externes, lents.

3. Contrôleur-périphérique selon la revendication 2, caractérisé en ce que la logique de commande (66) comporte un circuit répondant aux instructions du processeur universel pour déterminer le nombre de cycles d'horloge du contrôleur-décodeur à interdire par le signal WAIT.

4. Contrôleur-périphérique selon la revendication 3, caractérisé en ce que le contrôleur-décodeur d'instructions (23) comprend des moyens pour arrêter l'exécution de l'échange des données avec la mémoire externe/les registres externes pendant l'activation du signal WAIT par la logique de commande (66).

48

FIG. 1

PROCESSOR 103

MEMORY 101

MEMORY CONTROL 102

HOST DEPENDENT PORT MODULE 104

HOST SYSTEM 100

BASE MODULE 107

BASE MODULE 107

PERIPHERAL UNITS

105

MESSAGE LEVEL INTERFACES

BASE MODULE

BASE MODULE

109

UP TO 8 PERIPHERAL INTERFACES

108 PERIPHERAL-CONTROLLERS

105

OTHER HOST SYSTEM

HOST DEP PORT 200

MESSAGE LEVEL INTERFACES

105

0 116 098

FIG. 2A

FORE-GROUND ACCUM ⟨30_f⟩

BACK-GROUND ACCUM ⟨30_b⟩

ACCUMULATOR REGISTERS ⟨30⟩

ALU ⟨32⟩ — B — F — A

SHIFT LOGIC ⟨33⟩

BYTE SWAP ⟨34⟩

MEMORY OPERAND REGISTER ⟨31⟩

35 — FRG FLAGS    BKG FLAGS — 36

PARITY CHECK ⟨21⟩

INSTRUCTION REGISTER ⟨22⟩

EXTERNAL FLAGS ⟨23_e⟩    STATE CNTR. ⟨23_s⟩

INSTRUCTION DECODE & CONTROL ⟨23⟩

INTERRUPT MASK ⟨23_i⟩

20 — MEMORY READ PARITY

TO RAM 90

12 — MEMORY OUTPUT BUS

15 ⟨15⟩

11 — CLOCK CLEAR WAIT EXTERNAL FLAGS. INTERRUPT REQUEST DMA REQUEST

19 — MEMORY WRITE ENABLE GET STROBE PUT STROBES GET & PUT ADDRESS INTERRUPT ACKNOWLEDGE

BUFFER ⟨2⟩

PARITY ERROR    IRQ    WAIT

CONTROL LOGIC ⟨66⟩    HALT/REP    BUS EN

APPLICATION DEPENDENT LOGIC 60_L (I/O LOGIC)

66_ad ADDRESS DECODER

## Fig. 2B

STACK MEMORY *45*

STACK POINTER *46*

MRR SAVE *47*

*41* PROGRAM COUNTER

*40* MEMORY REFERENCE REGISTER

*50* PROGRAM PROM.

*10f*

*37* CONTROL REGISTER #1

*38* CONTROL REGISTER #2

*39* PARITY

REPETITION COUNTER *42*

INSTRUCTION BUS

*17₂*

*17₁*

*18*

*16* *15*

I/O BUS & MEMORY WRITE BUS

APPLICATION CONTROL REGISTERS

MEMORY ADDRESS BUS

GET

PUT

EXTERNAL REGISTERS R(N)

APPLICATION DEPENDENT REGISTERS *60*

RAM MEMORY *90*

PERIPHERALS *109*

*Fig. 2C*

DECODER CONTROLLER WITH LINEAR SEQUENCER

0 116 098

*Fig.2D*

*Fig.2E*

STATE COUNTS

ALTERNATE INSTRUCTION SET
USING EXTRA PROM-23x

⓪ ① ② ③ - - - - - ④ ⑤ ⑥ ⑦
FETCH  EXECUTE  EXECUTE  EXECUTE          FETCH  EXECUTE  EXECUTE  EXECUTE

_Fig.2C-I

6

0 116 098

23f ─┐

LOAD

REPETITION
COUNTER

COUNT 0

─ 42

REPEAT
MODE
FF

RESET

DECODER
CONTROLLER

VIA I/O BUS-IO ┐

HALT/REP

23

PUT

CONTROL
LOGIC

─ 66

_Fig.2F

BITS 0→15 MEMORY
ADDESS BUS

USED FOR BYTE-
ORIENTED OP

64K* DIRECT
ADDRESSING

16

32K* DIRECT ADDRESSING
(INCREMENTS DURING
REPEAT)

| 0→15          11 |
| PROGRAM          |
| COUNTER          |
| BITS 0→15        |

| 0→15          40 |
| MEMORY           |
| REFERENCE        |
| BITS 0→14 BIT 15 |

| 42          |
| BYTE        |
| SELECT      |

BITS
0→15

BITS
1→15

BIT 0

10

BITS 0→15
I/O BUS

MR 15
INPUT (USED ONLY IF
MEMORY-MAPPING
IS PERFORMED.)

* MEMORY WORD SIZE = 16 BITS
+ PARITY

FIG.3

0 116 098

Fig.4A

FRONTPLANE CONNECTORS (FRONTPLANE VIEW)

MRR 40

PROGRAM COUNTER 41

APPLICATION CONTROL LOGIC 66

BYTE SWAP 32

SHIFT LOGIC 33

INSTR DECOD-CONT 23

INSTRUCTION REGISTER 22

PROM OUTPUT REGISTER 50

SHIFT LOGIC 33

PROM OUTPUT REGISTERS

REREAT FLIP FLOP

| SIG NAME | | | SIG NAME |
|---|---|---|---|
| MADDR14/ | #00 | $00 | MADDR15/ |
| MADDR12/ | #01 | $01 | MADDR13/ |
| MADDR10/ | #02 | $02 | MADDR11/ |
| MADDR08/ | #03 | $03 | MADDR09/ |
| GND | #04 | $04 | MADDR07/ |
| MADDR05/ | #05 | $05 | MADDR06/ |
| MADDR03/ | #06 | $06 | MADDR04/ |
| MADDR01/ | #07 | $07 | MADDR02/ |
| MAP | #08 | $08 | MADDR00/ |
| GETSTB | #09 | $09 | BUSREQA/ |
| PROMENB/ | #10 | $10 | IRQ/ |
| IOBUS14 | #11 | $11 | IOBUS15 |
| IOBUS12 | #12 | $12 | IOBUS13 |
| IOBUS10 | #13 | $13 | IOBUS11 |
| IOBUS08 | #14 | $14 | IOBUS09 |
| IOBUS06 | #15 | $15 | IOBUS07 |
| IOBUS04 | #16 | $16 | IOBUS05 |
| IOBUS02 | #17 | $17 | IOBUS03 |
| IOBUS00 | #18 | $18 | IOBUS01 |
| REGADR4 | #19 | $19 | IOBUSPAR |
| GND | #20 | $20 | REGADR3 |
| REGADR1 | #21 | $21 | REGADR2 |
| FLAG3/ | #22 | $22 | REGADR0 |
| FLAG1/ | #23 | $23 | FLAG2/ |
| ACK1/ | #24 | $24 | HALTREP/ |

FIG.4B

NOTE: SEE TABLES VII XI FOR SIGNAL DESCRIPTIONS

MEM.
OUTPUT
BUS
20

OUTPUT
CNTRL. REG.
38,39

PROM.
OUTPUT
REGISTER
50

FIG.4B-1

| | #25 | $25 | |
|---|---|---|---|
| MEMOUT14 | #25 | $25 | MEMOUT15 |
| MEMOUT12 | #26 | $26 | MEMOUT13 |
| MEMOUT10 | #27 | $27 | MEMOUT11 |
| MEMOUT08 | #28 | $28 | MEMOUT09 |
| GND | #29 | $29 | MEMOUT07 |
| MEMOUT05 | #30 | $30 | MEMOUT06 |
| MEMOUT03 | #31 | $31 | MEMOUT04 |
| MEMOUT01 | #32 | $32 | MEMOUT02 |
| MEMOUT PA | #33 | $33 | MEMOUT00 |
| OCREG 106 | #34 | $34 | OCREG 107 |
| OCREG 104 | #35 | $35 | OCREG 105 |
| OCREG 102 | #36 | $36 | OCREG 103 |
| OCREG 100 | #37 | $37 | OCREG 101 |
| OCREG 206 | #38 | $38 | OCREG 207 |
| OCREG 204 | #39 | $39 | OCREG 205 |
| OCREG 202 | #40 | $40 | OCREG 203 |
| OCREG 200 | #41 | $41 | OCREG 201 |
| OCREG 2CK | #42 | $42 | OCREG 1CK |
| PUTSTB3/ | #43 | $43 | RAMRD/ |
| PUTSTB1/ | #44 | $44 | PUTSTB2/ |
| GND | #45 | $45 | CLKEN |
| HAIT/ | #46 | $46 | |
| CLR/ | #47 | $47 | |
| MAINTEN/ | #48 | $48 | RAMWE/ |
| PARERR/ | #49 | $49 | GETENB/ |

2

MEM.
OUTPUT
BUS
20

OUTPUT
CONTROL
REG 38,39

APPLIC
CONTROL
REG. 60

CLOCK

RAM
90

23

| EXTERNAL FLAGS 23e | REPEAT MODE FLIP FLOP 42r | FOREGROUND BACKGROUND F.F. 35f | INTERRUPT MASK 23i | STATE COUNTER 23s |
|---|---|---|---|---|

INSTR. DECODER- CONTROLLER

FIG.4B-2

3

| | |
|---|---|
| #50 | $50 |
| #51 | $51 |
| #52 | $52 |
| #53 | $53 |
| #54 | $54 |
| #55 | $55 |
| #56 | $56 |
| #57 | $57 |
| #58 | $58 |
| #59 | $59 |
| #60 | $60 |
| #61 | $61 |
| #62 | $62 |
| #63 | $63 |
| #64 | $64 |
| #65 | $65 |
| #66 | $66 |
| #67 | $67 |
| #68 | $68 |
| #69 | $69 |
| #70 | $70 |
| #71 | $71 |
| #72 | $72 |
| #73 | $73 |
| #74 | $74 |

GND

GND

BUSEN/
BUSENB/
IFETCHA/
IFETCHB/
BKGIFRGA
BKGIFRGB

MRRJ.A
MRRJ.B

INSTR.
REG.
22

DECODER-
CON-
TROLLER
23

PROM.
OUTPUT
REGISTER
50r

MEM. REF.
REG.
40

11

Fig.4B-3

STATE CNTR. 23

INSTR. DECODER CONTRLR. 23

STACK POINTER 46

DECOD. CONTRLR. 23

PROM. OUTPUT REG. 50r

CONDN. TEST REG. 23t

INSTR. REG. 22

PROM. OUT REG. 50r

SOURCE ACCUMUL. 30

DESTINATN ACCUMUL.

INSTR. REG. 22

MROEB/
SC1B
SC4
STKOVF/
SMOE/
BSROEX/
SHROEX/
MRSVOEX/
PCLD/
MOPNID/
INVOP
ACWRITE/
SMWEX/
STKA1
STKA3
BYTSWP/
SCS1X
ALUS3X/
ALUS1X
D3B
FOB
ACADR0
ACADR2
S1

#75 $75
#76 $76
#77 $77
#78 $78
#79 $79
#80 $80
#81 $81
#82 $82
#83 $83
#84 $84
#85 $85
#86 $86
#87 $87
#88 $88
#89 $89
#90 $90
#91 $91
#92 $92
#93 $93
#94 $94
#95 $95
#96 $96
#97 $97
#98 $98
#99 $99

MNTENB/
SC2B
SCB
10BRCE/
GND
BSBOEX/
SHBOEX/
RCOEX/
110A0EX/
MRLD/
REPEATB
COND/
ACBWE/
STKA0
STKA2
ENBREP/
SCS0X
ALUMDX
ALUS2X/
ALU50X
GND
F1B
ACADR1
SOB
S2

OUTPUT CONTROL REGISTER CLOCK (TO UIOSM)

3NAND 74

CLOCK/

* THIS CLOCK HAS THE OPPOSITE SENSE FROM THE LCP BACKPLANE CLOCK.

DESIRED EXT. REG. ADDRESS (DECODED FROM UIOSM)

PUT STROBE/ (FROM UIOSM)

CLOCK*

PUT STROBE/

OUTPUT CONTROL REGISTER CLOCK

A

**FIG.5** CLOCKING OF OUTPUT CONTROL REGISTERS (37, 38)

**FIG.6** UIO-SM ENABLING OF PROM 50

75 5NOR

PARITY DISABLE

40 MEMORY REF. REG.

40e

ENABLING CIRCUITRY

41e

PROGRAM COUNTER 41

GND

MADR 15

A15

GND.

MADR 14

A14

GND.

MADR 13

A13

GND.

PROMENB/

66 CONTROL LOGIC

13

0 116 098

TO INITIALIZE THE UIDSM, THE CLEAR LINE
MUST BE TRUE (ACTIVE LOW) FOR AT LEAST
TWO FULL CLOCK PERIODS.

125 ns

CLOCK *

17.5 ns MAX

CLEAR/

*THIS CLOCK HAS THE OPPOSITE SENSE FROM
THE LCP BACKPLANE CLOCK.

**Fig. 7** CLEAR LINE TIMING

125 ns

CLOCK *

t(s)          t(s)

WAIT/

t(s): 10 ns MIN.
115 ns MAX.

* THIS CLOCK HAS THE OPPOSITE SENSE
FROM THE LCP BACKPLANE CLOCK.

**Fig. 8** WAIT LINE TIMING

14

UIO STATE MACHINE GET/PUT TIMINGS
(NON REPEATED GET/PUT)

FIG. 9 GET/PUT TIMING (NON-REPEATED)

0 116 098

**Fig. 10** GET / PUT TIMING (REPEATED GET/PUT)

8 MHZ CLOCK* — 125ns — SET UP TIME / HOLD TIME

GET/PUT REG. ADDRESS — 108ns MIN. — 4ns MIN. (FROM UIOSM)

GET ENABLE/ GET STROBE/--- — 96ns MIN. — 6ns MIN., 29ns MAX. (FROM UIOSM)

GET DATA (I/O BUS) — 59ns MIN — 15ns MIN. — A B C — (TO RAM)

PUT STROBE/ — 93ns MIN. — 10ns MIN. (FROM UIOSM)

PUT DATA (I/O BUS) — 57ns MIN. — 10ns MIN. — A B C — (FROM UIOSM)

*THIS CLOCK HAS THE SAME SENSE AS THE 8MHZ LCP BACKPLANE CLOCK BUT HAS SOME RELATIVE DELAY DUE TO THE RECEIVE CIRCUITRY LOCATED ON BOTH THE APPLICATION DEPENDENT LOGIC AND THE UIO STATE MACHINE. ALL CLOCK RECEIVE CIRCUITRY THROUGHOUT THE APPLICATION DEPENDENT LOGIC MUST BE SIMILAR IN NATURE TO USE THESE TIMINGS MEANINGFULLY.

FIG. 11 MEMORY TIMING (READ) FOR UIO-SM

**THIS LINE IS USED BY SLOW ACCESS MEMORY DEVICES TO ALLOW ONE OR MORE EXTRA CLOCK PERIODS FOR DATA ACCESS. THIS LINE CAN BE USED IN THE SAME MANNER FOR LONGER MEMORY WRITES AS WELL AS TO HALT THE MACHINE IN GENERAL.

**FIG. 12** MEMORY TIMING (WRITE) FOR UIO-SM

* THIS SIGNAL IS LOW FOR ONE CLOCK CYCLE (125ns) DURING GET INSTRUCTIONS AND TWO CLOCK CYCLES (250ns) DURING WRTW OR WRTB INSTRUCTIONS. THIS SIGNAL WILL NOT BE EXTENDED IF ADDITIONAL WAIT STATES ARE INJECTED. AN EXTERNALLY GENERATED RAMWE/ SIGNAL WILL BE REQUIRED FOR MEMORY DEVICES THAT USE ADDITIONAL WAIT STATES.

** THIS LINE IS USED FOR A LONGER MEMORY WRITE CYCLE FOR SLOW WRITE MEMORY DEVICES. THIS LINE CAN BE USED IN THE SAME MANNER FOR LONGER MEMORY READS AS WELL AS TO HALT THE MACHINE IN GENERAL.

**FIG. 13** HALT REPETITION TIMINGS

CLOCK*

125 ns

20 ns MAX.

20 ns MAX.

75 ns MIN.

75 ns MIN.

HALTREP/

LAST PUT, GET, OR ALU Dp

FETCH

*THIS CLOCK HAS THE OPPOSITE SENSE FROM THE LCP BACKPLANE CLOCK.

**FIG. 14** PARITY ERROR REPORT TIMING

CLOCK*

125 ns

103 ns MIN.

MEMORY ADDRESS A

B

C

PARERR/

21 ns MIN.
63 ns MAX.

REPORT ON A (NO ERROR)

REPORT ON B (ERROR)

*THIS CLOCK HAS THE OPPOSITE SENSE FROM THE LCP BACKPLANE CLOCK.